(19) Europäisches Patentamt / European Patent Office / Office européen des brevets

(11) **EP 1 883 873 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(21) Anmeldenummer: **06742345.9**

(22) Anmeldetag: **10.05.2006**

(51) Int Cl.:
*G05B 23/02* (2006.01)    *G08G 1/081* (2006.01)

(86) Internationale Anmeldenummer:
**PCT/DE2006/000837**

(87) Internationale Veröffentlichungsnummer:
**WO 2006/122528 (23.11.2006 Gazette 2006/47)**

(54) **VERFAHREN ZUR KOORDINATION KONKURRIERENDER PROZESSE ODER ZUR STEUERUNG DES TRANSPORTS VON MOBILEN EINHEITEN INNERHALB EINES NETZWERKES**

METHOD FOR COORDINATION OF CONCURRENT PROCESSES FOR CONTROL OF THE TRANSPORT OF MOBILE UNITS WITHIN A NETWORK

PROCEDE DE COORDINATION DE PROCESSUS CONCURRENTS OU DE COMMANDE DU TRANSPORT D'UNITES MOBILES DANS UN RESEAU

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.05.2005 DE 102005023742**

(43) Veröffentlichungstag der Anmeldung:
**06.02.2008 Patentblatt 2008/06**

(73) Patentinhaber: **Eidgenössische Technische Hochschule Zürich**
**8092 Zürich (CH)**

(72) Erfinder:
• **HELBING, Dirk**
**01309 Dresden (DE)**
• **LÄMMER, Stefan**
**01069 Dresden (DE)**

(74) Vertreter: **Sperling, Thomas**
**Sperling, Fischer & Heyner**
**Patentanwälte**
**Niederwaldstraße 27**
**01277 Dresden (DE)**

(56) Entgegenhaltungen:
**US-A- 3 660 812     US-B1- 6 339 383**
**US-B1- 6 496 773**

• **HELBING D: "FUNDAMENTALS OF TRAFFIC FLOW" PHYSICAL REVIEW E. STATISTICAL PHYSICS, PLASMAS, FLUIDS, AND RELATED INTERDISCIPLINARY TOPICS, AMERICAN INSTITUTE OF PHYSICS, NEW YORK, NY, US, Bd. 55, Nr. 3, März 1997 (1997-03), Seiten 3735-3738, XP000874457 ISSN: 1063-651X**

## Beschreibung

Die Erfindung betrifft ein Verfahren zur Steuerung des Transports von mobilen Einheiten innerhalb eines Netzwerkes, insbesondere zur Steuerung eines Verkehrsnetzes oder zur Steuerung eines komplexen Produktionsprozesses. Die Erfindung ist weiterhin anwendbar zur Steuerung von Logistikprozessen und im weiteren Sinne auch für die Steuerung von Informationsübertragungsprozessen oder die Koordination von ineinander greifenden Organisations- bzw. Programmabläufen.

Derartige Verfahren werden eingesetzt, um beispielsweise innerhalb von Verkehrsnetzen einen optimierten Verkehrsfluss der Fahrzeuge und Fußgänger zu ermöglichen. Adaptive Steuerungsverfahren sind auch zur Steuerung von Produktionsprozessen oder in der chemischen Prozess- und Verfahrenstechnik im Einsatz. Generell ist jedoch anzumerken, dass die Abhängigkeit der Dynamik komplexer Systeme mit nichtlinearem Verhalten von der Netzwerkstruktur bis heute nur unvollständig verstanden wird und entsprechende Optimierungsverfahren daher heuristischer Natur oder *Best-Practice-Ansätze* sind. Dies ist bei großen Systemen auch mit dem überbordenden Rechenaufwand begründet, der mit einer wachsenden Anzahl von Netzwerkknoten "explodiert". Die verwendeten Verfahren haben folglich zahlreiche Unzulänglichkeiten. Ein gängiger Ansatz ist zum Beispiel die ereignisorientierte Simulationstechnik. Sie neigt jedoch zu "Aktionismus", während eine Minimierung der durchschnittlichen Wartezeiten im System paradoxerweise oft Zeitverzögerungen erfordert, um konkurrierende Prozesse besser zu koordinieren. Die Liste der eingesetzten Verfahren und ihrer jeweils unterschiedlichen Defizite ließe sich beliebig verlängern. Obwohl viele Verfahren Lösungsansätze für Teilprobleme liefern, fehlt bisher ein genereller Ansatz zur systematischen Koordination von konkurrierenden (Abfertigungs-) Prozessen in großen Netzwerken bei unregelmäßiger zeitlicher Variation von Nachfrage- und Kapazitätsgrößen.

Verfahren zur Verkehrsregelung in Verkehrsnetzwerken sind in verschiedenster Ausgestaltung im Stand der Technik bekannt. Verwandte Probleme treten auch beim Routing von Datenströmen in Netzwerken auf, beispielsweise dem Internet. Allerdings sind die bestehenden Unterschiede erheblich: Während die mobilen Einheiten in Verkehrsnetzen überwiegend von den Kanten (Straßen) aufgenommen werden, dort die größten Zeitverzögerungen erfahren und nicht verloren gehen, werden Daten überwiegend in den Netzwerkknoten (Servern) zwischengespeichert und verlieren dort Zeit bzw. gehen verloren, wenn die Speicherkapazität erreicht ist. Weiterhin sind in Datennetzen Umschaltzeiten vernachlässigbar und Nutzungskonflikte von anderer Art. Daher sind die Verfahren zum adaptiven Datenrouting zur Lichtsignalsteuerung nicht geeignet.

Die bekanntesten und verbreitetsten Strategien zur Verkehrsregelung in Verkehrsnetzwerken befassen sich mit der Synchronisation des Verkehrs entlang von Verkehrsadern mit dem Ziel der Erzeugung von Grünen Wellen, deren Eigenschaft es ist, dass der Verkehr entlang der Verkehrsader fließt, und dass dadurch der Kraftstoffverbrauch reduziert und die Reisezeiten verkürzt werden können. Auf Beispiele für die verschiedenen Realisierungsmöglichkeiten wird nachfolgend kurz verwiesen.

Nach der DE 44 36 339 A1 ist ein Verfahren zur verkehrsadaptiven Steuerung einer Verkehrsampelanlage bekannt, wobei Sensoren zur Verkehrserfassung im Kreuzungsbereich zyklisch Daten liefern, welche in konkrete Steuersequenzen für die Verkehrsampel umgewandelt werden. Bei dem Verfahren wird neben den für die Verkehrssicherheit erforderlichen Prinzipien kein vorgefertigtes Modell benötigt. Die Grünphasen werden in Abhängigkeit von zeitlichen Schwankungen des Verkehrsaufkommens dem Verkehrsstrom angepasst.

Nach der DE 198 41 457 A1 ist ein Verfahren zur Ermittlung eines verkehrsabhängigen Signalprogrammes für Signalgruppen von LichtsignalAnlagen bekannt, bei dem die Signalfolgen von Signalgruppen durch Signalprogramme bestimmt werden. Die Signalprogramme werden unter Berücksichtigung von aktuellen, durch Verkehrsdetektoren ermittelten Daten an den aktuellen Verkehrsablauf angepasst. Dabei werden Signalprogramme verschiedener Ordnung erzeugt, die mit einer Qualitätsfunktion bewertet werden und aus deren Kombination weitere Signalprogramme erzeugt werden. Das als optimal ermittelte Signalprogramm wird schließlich zur Steuerung der Lichtsignalanlage verwendet.

Nach der DE 196 47 127 A1 ist ein Verfahren zur automatischen Verkehrsüberwachung mit Staudynamikanalyse bekannt, bei der erfindungsgemäß laufend eine Schätzung der zeitabhängigen Positionen der stromaufwärtigen Stauflanke und der stromabwärtigen Stauflanke nach charakteristischen Beziehungen vorgenommen wird, welche den Fluss und die Dichte des Verkehrs und des Staus, den Zeitpunkt, zu dem die stromaufwärtige Stauflanke eine jeweils erste Messstelle passiert, den Zeitpunkt, zu dem die stromabwärtige Stauflanke diese Messstelle passiert, sowie den Fluss und die mittlere Fahrzeuggeschwindigkeit an dieser ersten sowie an einer stromaufwärts der stromaufwärtigen Stauflanke gelegenen zweiten Messstelle berücksichtigt.

Die EP 1 057 155 B1 offenbart ein Verfahren zur Verkehrsleitung in einem Straßennetz, wobei auch die Gefahr einer Blockierung einer stromabwärts liegenden Verbindung bei einer Zuteilungsbestimmung beurteilt und in einem Zentralrechner verarbeitet wird.

Den Verfahren nach dem Stand der Technik ist der Nachteil zu Eigen, dass die Steuerkonzepte entweder keine gute Koordination benachbarter Ampeln gewährleisten oder von zentral gesteuerten Steuereinheiten ausgehen, welche eine Vernetzung der einzelnen Ampelanlagen mit einem Zentralrechner voraussetzen. Die zentralrechnergestützten Verkehrsleit- und Regelsysteme sind aufgrund der erforderlichen Datenverbindungsleitungen kostenaufwändig und leiden tendenziell unter einer Überlastung der Steuer- oder Entscheidungszentrale. Weiterhin sind die Programme und Steuerroutinen zu wenig adaptiv, um auf plötzliche und zufällige Änderungen der Verkehrssituation zu reagieren.

Verallgemeinernd kann gesagt werden, dass die Grüne-Welle-Methode, die im Voraus berechnete Kontrollschemata enthält, zwanghaft den Verkehrsfluss in vorberechnete Muster, wie feste Signalfolgen oder Programmabläufe, zu fügen versucht. Da die Verkehrsbelastung in der Realität jedoch variiert, wurde der Bedarf an Reaktionsfunktionen der Signalsteuerung bald offensichtlich, was zur Weiterentwicklung der traditionellen Systeme führte. Allerdings funktionieren die daraus entstandenen Systeme nur unter idealisierten Bedingungen optimal oder die zugrunde gelegten Näherungsverfahren wirken sich nachteilig aus.

Neuere Entwicklungen integrieren eine größere Adaptabilität, wobei die lokale Steuerung auf der Vorhersage des Verkehrsaufkommens eines globalen Netzwerkes von Verkehrsadern beruht, in die lokale Schnittpunktsteuerungen integriert werden. Diese im Stand der Wissenschaft bekannten Modelle und Methoden erfordern große Datensammlungen und einen sehr hohen Prozessaufwand. Dazu erfordert die globale Koordination ständig Daten, die schwer zu erhalten oder online auszuwerten sind. Weiterhin impliziert eine globale Optimierung eine große Sensitivität auf weit entfernte Abläufe, welche die Flexibilität bei der Anpassung an lokale Abläufe unnötig einschränkt. Insgesamt ist den Verfahren nach dem Stand der Technik nachteilig gemeinsam, dass die Systeme nur schwerfällig oder nicht angemessen auf Ausnahmeereignisse, wie im Falle von Verkehrsnetzwerken auf Unfälle, Baustellen oder andere temporäre Änderungen im Straßennetz, Ausfälle von Datenleitungen, Steuerungsanlagen oder Zentralrechnern, natürliche oder industrielle Störfaktoren, Katastrophen oder auch terroristische Angriffe reagieren.

Aufgabe der Erfindung ist es somit, ein adaptives Verfahren zur Koordination konkurrierender Prozesse oder zur Steuerung des Transports von mobilen Einheiten in Netzwerken zur Verfügung zu stellen, welches einen hohen Grad an Flexibilität bei großer Robustheit gegenüber lokalen Ausfällen oder Störungen aufweist.

Die Aufgabe der Erfindung wird durch ein Verfahren zur Koordination von konkurrierenden Abfertigungsprozessen, etwa des Transports von mobilen Einheiten innerhalb eines Netzwerkes gelöst, welches Knotenpunkte und Kanten aufweist. Dabei sind die Knotenpunkte mit Steuereinheiten und die Knoten und/oder Kanten mit Datenerfassungselementen, z. B. Sensoren, zur Erfassung von Daten ausgestattet und besitzen eine begrenzte Abfertigungskapazität an zu bedienenden Einheiten. Die die Knotenpunkte verbindenden Kanten haben eine begrenzte Pufferkapazität an aufnehmbaren Einheiten, wobei an den Knoten mittels der Steuereinheiten ein (Schalt-) Zustand der Abfertigung von mobilen Einheiten, ein (Schalt-)Zustand der Nicht-Abfertigung und jeweils zwischen diesen ein Umschaltzustand angenommen wird. Das Verfahren ist dadurch gekennzeichnet, dass

a   die Steuerung des Netzwerkes dezentral und selbstorganisierend in den Steuereinheiten der Knotenpunkte oder lokal begrenzter Subnetzwerke erfolgt, wobei die Steuereinheiten benachbarter Knotenpunkte bzw. Subnetzwerke miteinander zum Datenaustausch in Verbindung stehen und dass

b1   Daten aus Voraussagemodellen der lokalen Prozessabläufe am jeweiligen Knoten und/oder Daten aus Voraussagemodellen der lokalen Prozessabläufe an benachbarten Knoten und/oder

b2   Daten von Datenerfassungselementen des jeweiligen Knotens bzw. der mit ihm verbundenen Kanten und/oder Daten von Datenerfassungselementen benachbarter Knoten bzw. der mit ihnen verbundenen Kanten

c   für die lokale Simulation und Optimierung von Schaltungen der Steuereinheit zur Ermittlung der Leistungsfähigkeit (Performance) der Knoten oder Subnetzwerke unter Berücksichtigung der Pufferkapazität der Kanten auf der Basis von Modellen für Kurzzeitprognosen bei fest angenommenen Schaltzuständen benachbarter Knoten eingesetzt werden, wobei

c1   für die Subnetzwerke mehrere Schaltungen hoher Performance durch Kombination von Schaltungen hoher Priorität für die betroffenen Einzelknoten erzeugt werden und

c2   ein Test der Schaltungen hoher Performance in den Subnetzwerken erfolgt und anschließend

c3   die Schaltung mit der besten Performance ausgewählt und die zugehörigen Steuersignale für die betroffenen Knoten ausgegeben werden.

Das Verfahren ist bevorzugt dadurch gekennzeichnet, dass die in die lokale Simulation und Optimierung in Verfahrensschritt c einbezogenen Zielfunktionen benachbarter Knoten in Abhängigkeit ihrer Entfernung zu den Grenzen des Subnetzwerks gewichtet werden. Vor allem im Randbereich des jeweils optimierten Subsystems werden die Knoten geringer gewichtet.

Die Wichtung im dezentralen Steuerungsverfahren kann beispielsweise durch den Ausdruck

$$\sum_{i,j} \int_{t_0}^{t} dt' \, w_{ij}^n \, f_{ij}^n(t')$$

erfolgen, der bei der Optimierung der Steuerung maximiert wird. Hierbei steht $w_{ij}^n$ für das Gewicht, das die Abfertigung von Kante $i$ nach $j$ am Knoten $n$ auf die Optimierung haben soll, und $f_{ij}^n(t)$ für eine Ziel- bzw. Bewertungsfunktion.

Das erfindungsgemäße Verfahren weist für die Simulation und Optimierung in Verfahrensschritt c bevorzugt folgende Eigenschaften auf:

d1 bei geringer Nachfrage von den mobilen Einheiten erfolgt an den Knoten eine einzelne Abfertigung der Einheiten ohne Wartezeiten, so dass die Anzahl der abgefertigten Einheiten proportional zu den durchschnittlich ankommenden Einheiten ist, wobei

d2 bei hoher Nachfrage mit unvermeidbaren Wartezeiten eine gruppenweise Abfertigung der Einheiten durch längere Schaltphasen zur Minimierung der Umschaltverluste erfolgt, wobei

d3 die Minimierung der Umschaltverluste bei Bedarf mit der priorisierten Abfertigung von zielnahen mobilen Einheiten kombiniert wird, um diese schnell aus dem Netzwerk zu entfernen,

d4 Schaltzeitverluste durch vorzeitiges Umschalten zugunsten einer Synchronisation von benachbarten Abfertigungsschaltzuständen durch eine prognostizierte höhere Abfertigungskapazität an benachbarten Knoten überkompensiert werden,

d5 Pufferkapazität bei hoher Nachfrage in den dem Knoten nachfolgenden Kanten reserviert wird, wobei die pro Kante zugestandene Pufferkapazität adaptiv angepasst wird,

d6 eine Priorisierung, nach der die Einheiten an den Knoten abgefertigt werden, auf der Grundlage individueller Eigenschaften der Einheiten möglich ist und dass

d7 eine Beschränkung der maximalen Dauer der Nichtabfertigung bei extrem hoher Nachfrage durch Kontingentierung gewährleistet wird.

Nach einer vorteilhaften Ausgestaltung der Erfindung ist vorgesehen, dass die erforderlichen Modellparameter durch eine Kombination mehrerer alternativer Simulations- und Messdaten ermittelt werden und dass bei Fehlen oder Unplausibilität von (Mess-)Daten gemäß Verfahrensschritt b2 die fehlenden bzw. unbrauchbaren Daten durch ein Prognosemodell geschätzt werden und/oder dass bei Fehlen oder Unplausibilität von Simulations- oder Messdaten gemäß Verfahrensschritt b1 nach einer fest vorgegebenen Steuerung (Festzeitsteuerung) gesteuert wird.

Eine weitere Ausgestaltung der Erfindung ergibt sich dadurch, dass bei hoher Nachfrage mit Wartezeiten an den Knoten parallel zur gruppenweisen Abfertigung von Einheiten zu passender Zeit eine Einzelabfertigung von Einheiten erfolgt, die ansonsten zu konfliktbehafteten Abfertigungsströmen gehören.

Soweit erforderlich, übermitteln die Einheiten Daten zu ihren Zielen an die Steuereinheiten der nächstgelegenen Knoten.

Das erfindungsgemäße Verfahren ist bevorzugt für die Steuerung eines Verkehrsnetzes verwendbar, wobei die Knoten des Netzwerkes die Kreuzungen und die Steuereinheiten die Ampeln und die Kanten die Straßenabschnitte und die mobilen Einheiten Fahrzeuge und/oder Fußgänger des Verkehrsnetzes darstellen.

Weiterhin ist das Verfahren verwendbar für die Steuerung von Produktionsprozessen. In diesem Fall stellen z. B. die Knoten Produktionsmaschinen, die Steuereinheiten die Maschinensteuerung, die Kanten die Transportwege und Puffer zwischen den Produktionsmaschinen sowie die mobilen Einheiten die aus dem Produktionsprozess hervorgehenden Produkte dar. Verschiedene Ziele entsprechen verschiedenen Produktsorten (Artikeln) und unterschiedliche Routen unterschiedlichen Produktionsabläufen.

Nach einer weiteren Ausgestaltung der Erfindung ist das erfindungsgemäße Verfahren verwendbar für die Steuerung der Logistik eines Gütertransportes, wobei die Knoten die Umschlagplätze, die Kanten die Transportwege und die mobilen Einheiten die Transportgüter darstellen.

Bei der Anwendung auf die Koordination von Organisationsabläufen entsprechen die Einheiten den Vorgängen und die Knoten den Bearbeitern, während die Kanten die Verwaltungs- oder Beförderungswege der Vorgänge beschreiben. Die Steuerung entspricht den vorgenommenen Priorisierungsentscheidungen. Entsprechend lassen sich Programmabläufe behandeln, bei denen die Knoten Programmmodulen entsprechen, die Verarbeitungsprozesse von Daten vollziehen. Die Weitergabe von Daten zwischen Programmmodulen definiert die Kanten des Netzwerks aufeinander folgender Verarbeitungsprozesse. Die Steuerung dient der Koordination und Harmonisierung der Prozesse im Sinne eines besseren Einsatzes von Verarbeitungskapazitäten und einer schnelleren Abarbeitung.

Eine mögliche Erweiterung des Anwendungsbereiches des erfindungsgemäßen Steuerungsverfahrens ergibt sich auf dem Gebiet der Biotechnologie und Medizin. Letztendlich lässt sich auch die Verteilung von Substanzen oder Wirkstoffen in Zellen, Geweben oder Organismen als logistischer Vorgang beschreiben. Das vorgeschlagene Steuerverfahren könnte man daher zur Manipulation dieses Verteilungsprozesses, etwa zum gezielteren Einsatz von Pharmaka einsetzen.

Ein Verkehrsnetz, welches zur Durchführung des erfindungsgemäßen Verfahrens geeignet ist, weist eine Vielzahl von Kreuzungen, Straßenabschnitten, Sensoren und Ampelanlagen mit computer- oder prozessorgestützten Steuereinrichtungen auf und ist weiterhin dadurch gekennzeichnet, dass den Kreuzungen Ampelanlagen und Kreuzungen oder Straßenabschnitten Sensoren zugeordnet sind, wobei die Steuereinrichtungen zum Empfang von Daten mit den Sensoren und die Steuereinrichtungen benachbarter Ampelanlagen zum Austausch von Daten in Verbindung stehen.

Gemäß einer Vorzugsausgestaltung der Erfindung sind die Datenverbindung zwischen den Sensoren und den Steuereinrichtungen der Ampelanlagen sowie zwischen den Steuereinrichtungen benachbarter Ampelanlagen drahtlos ausgebildet. Beispielsweise können die Datenverbindungen als wireless LAN (WLAN), als Bluetooth, als Infrarotverbindung, als Radarsignal, als Laserlink oder deren Weiterentwicklungen umgesetzt sein.

Unter einem Netzwerk im Sinne der beschriebenen Erfindung ist eine Vielzahl von Knoten und Kanten zu verstehen, die miteinander in Verbindung stehen. Unter einem Knoten wird gemäß dem dargelegtem Hauptanwendungsgebiet der Erfindung eine Straßenkreuzung verstanden, jedoch ist die Anwendung des erfindungsgemäßen Prinzips auch auf komplexe Produktions- oder Organisationsprozesse sowie auf Organisationsprozesse oder Programmabläufe möglich, wobei ein Knoten dort beispielsweise einer Verarbeitungsmaschine, einem Bearbeiter oder einem Datenverarbeitungsprozess entsprechen würde.

Eine Kante entspricht in einem Verkehrsnetzwerk einem Straßenabschnitt, in einem Produktionsprozess einem Transportweg der Produkte von einem Verarbeitungsschritt zum nächsten oder einem (Zwischen-)Puffer, in einem Organisationsprozess oder Programmablauf beispielsweise der Weiterleitung bzw. dem Austausch von Daten.

Die Abfertigungskapazität eines Knotens entspricht seinem maximalen Durchsatz, wohingegen die Pufferkapazität einer Kante ihrer maximalen Aufnahmekapazität für Einheiten, d. h. der maximalen Warteschlange, entspricht. Weiterhin entspricht die Abfertigungsdauer der Zeitspanne, bis eine in Abfertigung befindliche Einheit den Knoten verlassen hat, also der Zeitspanne, welche zwischen dem Verlassen der vorhergehenden Kante durch eine Einheit und dem Erreichen der nachfolgenden Kante des Knotens verstreicht.

Unter einer Priorisierung wird ein optimiertes Abfertigungsschema verstanden, da es beim zeitnahen Eintreffen von Einheiten an einem Knoten zu einer Überschreitung der Abfertigungskapazität oder Abfertigungskonflikten an dem Knoten kommt und eine Priorisierung der abzufertigenden Einheiten gegenüber anderen Einheiten vorgenommen werden muss, um ein optimales Abfertigungsergebnis zu erreichen.

Eine Steuereinheit stellt ein Systemelement dar, das Priorisierungsentscheidungen für die Reihenfolge und/oder Parallelität von Bedienungs- bzw. Abfertigungsprozessen umsetzt. Eine Steuereinheit ist jeweils einem Knoten zugeordnet und nach dem Hauptanwendungsgebiet der Erfindung zum Beispiel als Ampelanlage ausgebildet.

Der Schaltzustand der Abfertigung von mobilen Einheiten am Knoten entspricht beim Verkehrsnetzwerk einer grün geschalteten Ampel und der Schaltzustand der Nicht-Abfertigung einer roten Ampel. Zwischen diesen Schaltzuständen ist ein Umschaltzustand vorgesehen, welcher einer gelb geschalteten Ampel entspricht.

Es wurde gefunden, dass ein erwünschtes Maß an Flexibilität durch die Unabhängigkeit der lokalen Steuerung von zentralen Steuer- oder Regelkontrollzentren ermöglicht wird. Um die gestellte Aufgabe zu lösen, wird konzeptionsgemäß ein autonomes, adaptives Steuerungsverfahren basierend auf einer bedarfssensitiven Selbstorganisation von Knotenpunkten vorgeschlagen, welches zu einem angemessenen Abfertigungsbetrieb führt und darüber hinaus sinnvollerweise Synchronisationsmuster, wie im Falle von Verkehrsnetzwerken eine Grüne Welle, selbständig erzeugt.

Besonders vorteilhaft schlägt sich dabei nieder, dass das erfindungsgemäße Verfahren nicht nur die mit einem Verkehrsstrom mobiler Einheiten verbundene nachgefragte Kapazität berücksichtigt, sondern darüber hinaus auch die verfügbare bzw. angebotene Kapazität der folgenden Netzwerkkanten.

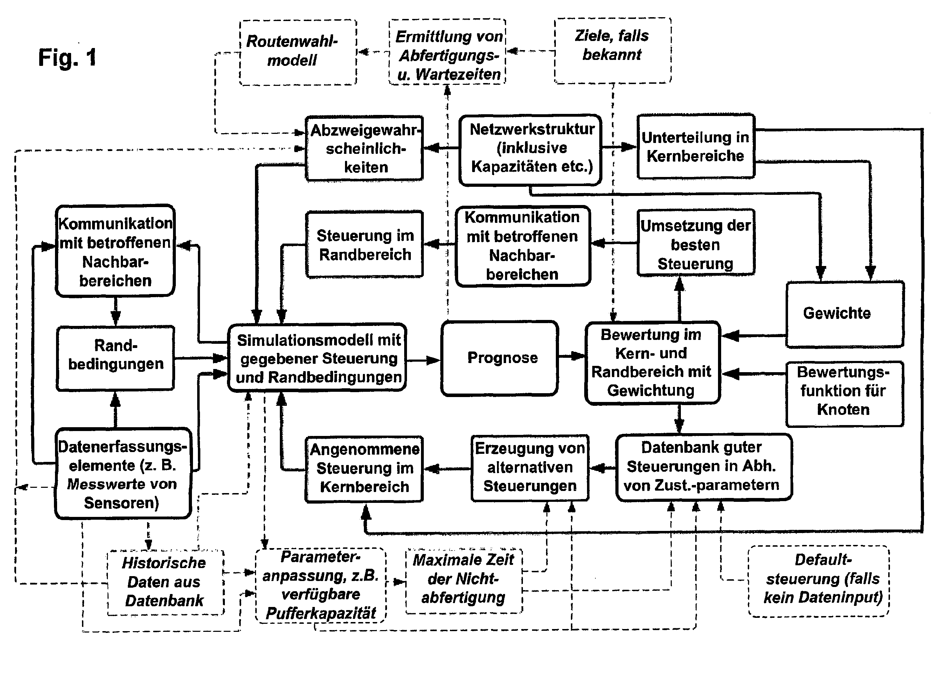

Die verallgemeinerungsfähige Konzeption wird nachfolgend am Beispiel eines Verfahrens zur Steuerung eines Verkehrsnetzwerkes erläutert. Nach der Konzeption der Erfindung wird ein Prinzip zur Realisierung einer selbstorganisierten Steuerung von Knoten durch einen geeigneten Koordinationsmechanismus vorgeschlagen. Das Konzept wird in Fig. 1 veranschaulicht.

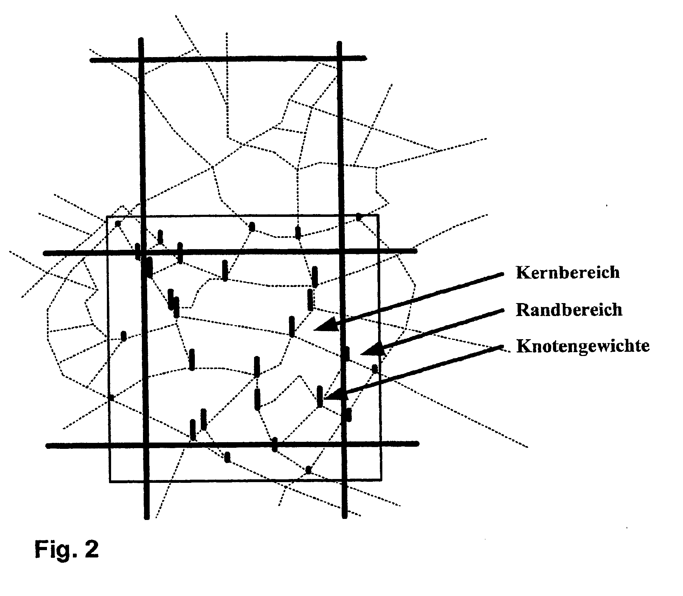

1) Das aus Kanten (Richtungsfahrbahnen, Straßenabschnitten) und sie verbindenden Knoten (Verbindungsstücken, Kreuzungen) bestehende (Straßen-)Netzwerk wird zunächst in so genannte Kernbereiche $n$ unterteilt. Diese können beispielsweise einzelnen Knoten entsprechen, aber auch den Knoten, die sich innerhalb eines quadratischen, sechseckigen oder anders definierten, zusammenhängenden Subsystems befinden. Fig. 2 illustriert beispielhaft quadratisch gewählte Subsysteme (dicke Linien).

2) Zu jedem Kernbereich wird ein zugehöriger Randbereich bestimmt, der in Fig. 2 mit den dünnen durchgezogene Linien umrahmt ist. Er ist dadurch definiert, dass die in ihm befindlichen Einheiten (Fahrzeuge oder andere Verkehrsteilnehmer) innerhalb eines vorzugebenden Optimierungszeithorizonts $T$ den Kernbereich erreichen oder beeinflussen können bzw. dadurch, wie weit im Kernbereich befindliche Einheiten innerhalb dieser Zeit gelangen können. Der Kernbereich und sein Randbereich zusammen definieren ein Subnetzwerk, in dem die lokale Optimierung der (Lichtsignal-)Steuerung stattfindet. Besteht der Kernbereich aus einem einzigen Knoten, genügt es im Prinzip, sich auf das Subnetzwerk zu beschränken, in dem Fahrzeuge von der Ampelschaltung am Knoten n betroffen sein können und die Ampelschaltung somit beeinflussen können sollten. Daher erfolgt eine Beschränkung auf den Radius, der von Fahrzeugen während der maximalen Grünzeit $T$ durchmessen werden kann. Dieser Radius entspricht etwa einem Viertel bis zur Hälfte der maximalen, gesetzlich vorgeschriebenen Zykluszeit $T$. In dieser Zeit beeinflussen nur jene Fahrzeuge das für eine Lichtsignalanlage maßgebliche Geschehen, die sich in einem Radius $V_0 T$ um die Lichtsignalanlage befinden, wobei $V_0$ die maximale, gesetzlich vorgeschriebene Geschwindigkeit ist. De facto kann man sich sogar auf den Radius $\overline{V} T$ beschränken, wobei $\overline{V} \approx V_0/3$ die mittlere Geschwindigkeit im behinderten Verkehr repräsentiert. Man beachte, dass bei geringem Verkehrsaufkommen mit hohen mittleren Geschwindigkeiten die optimalen Grünzeiten kurz sind, um die Wartezeiten der Fahrzeuge zu verkürzen. Für den Stadtverkehr ist es somit sinnvoll, einen Radius von etwa 300 bis 500 Metern bei der lokalen (dezentralen) Lichtsignaloptimierung zu berücksichtigen. Größere Radien können zu etwas besseren Ergebnissen führen, geringere Radien zu deutlich schlechteren Ergebnissen. Wegen der abnehmenden Vorhersagegenauigkeit einer Verkehrsprognose über längere Zeiträume macht es jedoch wenig Sinn, $T$ und damit den Radius viel größer als angegeben zu wählen. Infolgedessen kann eine dezentrale Steuerung nahe an das Systemoptimum gelangen; bei wesentlich größerer Flexibilität.

3) Bei der Lichtsignaloptimierung handelt es sich um ein kombinatorisches so genanntes NP-hartes Optimierungsproblem, bei dem die erforderliche Rechenzeit mehr als polynomial mit der Systemgröße bzw. der Anzahl der Knoten wächst, so dass selbst Supercomputer überfordert sein können, die optimale Lösung in Echtzeit zu bestimmen. Die Optimierung in Subnetzwerken reduziert die Anzahl möglicher Lösungen und damit die Rechenzeit erheblich. Eine derartige dezentrale Optimierung kann dann und nur dann gute Gesamtlösungen liefern, wenn das Optimierungsverfahren die Steuerungen von benachbarten, d. h. über Kanten verbundene Bereiche koordiniert und aufeinander abstimmt, was durch die Erfindung erreicht wird. Hierbei müssen genügend und außerdem geeignete Parameter variiert werden, was man unter anderem durch Wahl der Größe der Subsysteme und des Optimierungszeithorizonts, aber auch durch die Optimierungstiefe, d. h. die Anzahl verglichener Alternativlösungen erreichen kann.

Ein solcher dezentraler Optimierungsansatz kann deshalb sehr gute Lösungen liefern, weil zwar in der Regel nur eine einzige optimale Lösung (Steuerung) existiert, aber die Anzahl nahezu optimaler Lösungen schon mit geringem Abstand zur optimalen Lösung schnell zunimmt. Die Optimierungsstrategie ist daher, bei drastisch gesteigerter numerischer Performance nahezu systemoptimale Lösungen durch dezentrale, aber koordinierte Optimierung zu erreichen. Unter den nahezu systemoptimalen Lösungen werden solche ausgewählt, die gleichzeitig den lokalen Gegebenheiten am besten gerecht werden. Hierdurch erreicht die vorgeschlagene Erfindung eine geringere Sensitivität gegenüber weit entfernten Abläufen zugunsten einer größeren Adaptivität und Flexibilität gegenüber dem lokalen Geschehen.

4) Die Optimierung der Steuerung in den Kernbereichen findet in bestimmten Zeitschritten statt, beispielsweise in Zeitschritten, die vergleichbar mit der Umschaltzeit $\tau$ sind.

5) Bei der Optimierung im Inneren eines Kernbereichs wird die während des Planungshorizonts T' vorgesehene Steuerung im zugehörigen Randbereich normalerweise nicht geändert. Festzeitschaltungen oder anderweitig vorgegebene Steuerungen an einzelnen Knoten werden bei der Optimierung als zeitabhängige, aber nicht veränderbare Randbedingung berücksichtigt.

6) Alle Knoten, im Bedarfsfall sogar die einzelnen Abfertigungseinheiten (Lichtsignalanlagen), bekommen vom Subsystem n abhängige $w_{ij}^n$ Gewichtete zugewiesen, deren Größe in Fig. 2 durch die Länge der vertikalen Balken an den Knoten der gestrichen dargestellten Straßen illustriert ist. Erfindungsgemäß spielt die Wahl der Gewichte eine entscheidende Rolle für die Performance bzw. Güte der Lösung im Gesamtsystem und allen Kernbereichen. Als Beispiel nehmen wir im Folgenden an, dass die Gewichte im Inneren des Kernbereichs gleich 1 und außerhalb des jeweils dezentral optimierten Kern- und Rand-Bereichs gleich 0 gesetzt werden. Letzteres macht das Optimierungsverfahren erheblich effizienter. Zur weiteren Erläuterung diskutieren wir nun drei beispielhafte Spezifikationen der Gewichte im Randbereich eines Kernbereichs:

a) Werden die Gewichte im Randbereich gleich 0 gesetzt, dann gibt es bei der Optimierung keine Rücksichtnahme auf benachbarte Kernbereiche. Eine Koordination zwischen Nachbarbereichen ist damit unwahrscheinlich und die erwartete Lösung fernab vom Systemoptimum. Diese Optimierung könnte man als "egoistische lokale Kontrolle" bezeichnen und mit "Kleinstaaterei" vergleichen.

b) Die Gewichte im Randbereich werden wie innerhalb des jeweils betrachteten Kernbereichs (gleich 1) gewählt, so wie dies bei konventionellen Parallelisierungsalgorithmen mit der Halomethode geschieht, wobei der Halo dem Randbereich entspricht: Für diesen Fall wird eine große Sensitivität gegenüber weit entfernten Geschehnissen erwartet, welche die Flexibilität der Reaktion auf lokale Ereignisse einschränkt. Darüber hinaus kann es geschehen, dass sich die Optimierung an eine Steuerung im Randbereich adaptiert, die unter Umständen bereits im nächsten Zeitschritt revidiert wird, was eine wirksame Koordination untergräbt. Derartige Probleme treten oft dann auf, wenn sich mehrere Prozesse auf der gleichen Zeitskala aneinander anzupassen versuchen.

c) Wir schlagen daher vor, die Gewichte im Randbereich so zu wählen, dass sie in geeigneter Weise mit wachsendem Abstand vom jeweiligen Kernbereich auf 0 abfallen, also umso kleiner sind, je länger Einheiten benötigen, um in den Kernbereich zu gelangen. Dies führt zur Rücksichtnahme auf benachbarte Kernbereiche. Das heißt, suboptimale Lösungen (wie zusätzliche Wartezeiten) werden unter Umständen dann in Kauf genommen, wenn sie in den Randbereichen überkompensiert werden. Dieser Optimierungsansatz fördert die Koordination zwischen Nachbarbereichen und synchronisierte Steuerungen. Er kann als "altruistische dezentrale Steuerung" bezeichnet werden und führt erfindungsgemäß zu nahezu systemoptimalen Zuständen. Weit entfernte Geschehnisse haben dabei einen geringen Einfluss auf das lokale Geschehen, während die lokale Situation und die Situation in Nachbarbereichen berücksichtigt wird. Ein weiterer Vorteil ist, dass im Unterschied zu Variante b) eine leichte Verschiebung der Kernbereiche überwiegend zu ähnlichen Lösungen führt. Die Spezifikation der Kernbereiche wirkt sich also nicht so willkürlich wie bei der Vorgehensweise b) aus. Aus ähnlichen Gründen wird die Revidierungsproblematik des Verfahrens b) reduziert.

7) Die lokale (dezentrale) Optimierung in den Kernbereichen erfolgt sinnvollerweise anhand eines datenbankgestützten Verfahrens. In der Datenbank sind (optional) eine Festzeitsteuerung sowie eine bestimmte Anzahl B der besten bisherigen Lichtsignalsteuerungen hinterlegt, und zwar in einer Vorzugsausführung in Abhängigkeit von Parametern, welche die Situation im jeweiligen Subnetzwerk charakterisieren, wie etwa dem Verkehrsaufkommen im Kern- oder Randbereich oder dem mittleren Füllgrad $\sum_i l_i(t)/L_i$ der Streckenabschnitte. Derartige Parameter können verfahrensbegleitend erhoben werden, beispielsweise durch exponentielle oder gleitende Mittelung von Simulations- oder Messwerten, durch in der Datenbank hinterlegte Erfahrungswerte über die Verkehrssituation an vergleichbaren Tagen oder als (Fit-)Funktion bestimmter Simulations- oder Messwerte.

Diese in der Datenbank hinterlegten Steuerungen stellen den Ausgangspunkt der Erzeugung alternativer Steuerungen durch Variation einzelner Steuerungsparameter dar. Fällt ihre Bewertung besser aus als die Bt-beste in der Datenbank hinterlegte Steuerung aus, so ersetzt sie diese, vorausgesetzt die Lösung ist vorschriftsgemäß oder technisch möglich. Andernfalls wird sie verworfen.

Mit einer solchen Verfahrensweise wird allmählich ein Lerneffekt erzielt, d. h. die vorgehaltene Ausgangsmenge guter Lösungen wird immer besser und stabilisiert sich schließlich, so dass sich eine gewisse Regelmäßigkeit in der Steuerung des Systems einstellt. Diese ist erwünscht, damit sich Fahrer in ihrem Routenwahlverhalten auf die Steuerung einstellen können. Weiterhin hat die Variation der besten Steuerungsvarianten den Vorteil, dass man bei der Optimierung nicht jedes Mal von vorne anfängt (wie etwa bei enumerativen Verfahren), sondern die knappe Optimierungszeit wesentlich besser nutzen kann, was die Optimierung größerer Kernbereiche und somit die Gewinnung besserer Lösungen erlaubt.

In der beschriebenen Weise lernt das Steuerungsverfahren immer bessere Steuerungsvarianten, die von der Netzwerktopologie und von den Zustandsvariablen des Systems abhängen, aber in jedem Zeitpunkt flexibel auf die jeweilige Verkehrslage vor Ort reagiert.

8) Gestartet wird bei der Optimierung mit einer geeigneten Festzeitsteuerung, welche die Rückfallebene ist (falls Sensoren ausfallen). In jedem Zeittakt werden aber neue Varianten durchprobiert. Bei der Variation der Steuerung werden für die nicht mit einem festen Programm gesteuerten Knoten des Kernbereichs beispielsweise folgende Steuerungsparameter variiert: Umschaltzeitpunkt, nächste bediente Signalgruppe, etc., auf einer langsameren Zeitskala eventuell auch Parameter wie der Planungs- bzw. Optimierungszeithorizont usw.

Zur numerischen Effizienzsteigerung der Optimierung werden erfindungsgemäß Varianten, die besonders aussichtsreich sind, zuerst erzeugt und getestet, da die Anzahl der in jedem Zeitschritt testbaren Varianten durch die Rechenleistung beschränkt ist. Dies gilt beispielsweise a) für die Auswahl der Signalgruppen, b) für die Variation der Grünzeiten und c) für die Variation der Umschaltzeitpunkte:

a) Zunächst werden zur Reduktion der Komplexität die Kombinationen der Grünphasen an allen benachbarten Ampeln einer Kreuzung auf die kompatiblen, das heißt konflikt- bzw. garantiert unfallfreien Grünschaltungen eingeschränkt.

Die Zahl der Grünphasen bzw. Schaltkombinationen lässt sich deutlich reduzieren, wenn man lediglich diejenigen betrachtet, bei denen nur kompatible Flüsse gemeinsam abgefertigt werden, d. h. grün zugewiesen bekommen. Flüsse sind kompatibel, wenn sich ihre Fahrlinien nicht kreuzen. Diese "sicheren" Kombinationen dürfen jedoch nicht mit den herkömmlichen Ampelphasen verwechselt werden, wo kompatible Flüsse zwangsweise gemeinsam bedient werden. Hier ist es beispielsweise auch möglich, nur einer einzigen rechts abbiegenden Spur grün zu geben, während alle anderen Ampeln rot zeigen. Dies ist dann sinnvoll, wenn Streckenkapazitäten für andere Verkehrsströme dringender erforderlich sind und somit besser freigehalten (reserviert) werden. Auch der Zustand "alle Ampeln rot" ist sicher und damit erlaubt. Er kann sinnvoll sein, um ein schnelleres Freischalten für eintreffende Einzelfahrzeuge zu ermöglichen. Die Menge aller sicheren (kompatiblen) Schaltkombinationen findet man, indem man aus der Liste aller möglichen Kombinationen diejenigen eliminiert, bei denen inkompatible Flüsse gemeinsam grün haben.

b) Weiterhin kann ein guter Startwert für die Grünzeitdauer nach einem Nachfrage-und Angebotsprinzip festgelegt werden:

Hierzu wird für einen einzelnen Knoten ein Optimierungs-Prinzip herangezogen, welches ermittelt, wie viele Fahrzeuge in einer bestimmten Grünzeit abgefertigt werden könnten. Dabei werden Wechselwirkungseffekte zwischen benachbarten Knoten zunächst vernachlässigt. Jedoch wird der verfügbare Platz in den Anschluss-Straßen durch zeitabhängige Spezifikation der Funktion $Q_i^{dep}(t')$ berücksichtigt (s. Punkt 9).

Die Anzahl $N_i'(t)$ der Fahrzeuge, die den Straßenabschnitt vom gegenwärtigen Zeitpunkt $t_0$ bis zum Zeitpunkt $t$ verlassen, lässt sich abschätzen als

$$N_i'(t) = I_i \int_0^t dt' Q_i^{dep}(t'), \qquad (1)$$

wobei $I_i$ die Anzahl der Spuren ist, die in die gleiche Richtung führen, und $Q_i^{dep}(t')$ der den Straßenabschnitt $i$ zum Zeitpunkt $t'$ verlassende Fahrzeugfluss. $Q_i^{dep}(t')$ ist gleich 0, wenn in einem der stromabwärtigen Straßenabschnitte keine Kapazität verfügbar ist.

Im Vergleich dazu lässt sich die Anzahl $N_i(t)$ der Fahrzeuge, die den Straßenabschnitt vom gegenwärtigen Zeitpunkt $t_0$ bis zum Zeitpunkt $t$ verlassen, wenn zum Zeitpunkt $t_0$ auf gelb und zum Zeitpunkt $t_0+\tau$ auf grün geschaltet würde, abschätzen als

$$N_i(t) = \int_0^t dt' I_i Q_i^{dep}(t') = \int_{0+\tau}^t dt' I_i Q_i^{dep}(t') \qquad (2)$$

wobei $\tau$ die Schaltzeit bezeichnet. Die Formel

$$\Delta N_i(t_0) = I_i \int_0^{t_0+\tau} dt' Q_i^{dep}(t') \qquad (3)$$

reflektiert den Schaltzeitverlust, d. h. die Anzahl der Fahrzeuge, die durch das Umschalten zwischen dem Abfertigen verschiedener Richtungen (die Gelbzeit/Verlustzeit r) weniger abgefertigt würden.

Es werden nun die Prognosewerte für die bis zum Zeitpunkt $t$ abfertigbaren Fahrzeugzahlen über alle gleichzeitig abfertigbaren Verkehrsströme $i \in I$, d.h. alle kompatiblen Grünphasen, summiert:

$$N_I(t) = \sum_{i \in I} N_i(t) \qquad (4)$$

usw. Für eine einzelne Kreuzung ist dann Folgendes festzustellen: Wenn die Signalgruppe $J$ (d. h. die entsprechende Kombination kompatibler Grünzeiten) zum gegenwärtigen Zeitpunkt $t_0$ auf grün geschaltet würde, so würde sie bis zum Zeitpunkt $t$ die größtmögliche Anzahl von Fahrzeugen abfertigen, wenn der Ausdruck

$$N_J(t) - N_I'(t) = N_J(t) - N_I(t) - \Delta N_I(t_0) \qquad (5)$$

unter allen möglichen Signalgruppen $J$ den maximalen Wert annimmt Solange der Ausdruck negativ ist, ist es am besten, die aktuell aktive (d. h. freigeschaltete) Signalgruppe weiterzubetreiben. Zum Umschalten von der Bedienung von Signalgruppe $I$ auf Signalgruppe $J$ muss also der Wert $N_J(t)$ mindestens um den Schwellwert $\Delta N_I(t_0)$ besser ausfallen als der Wert $N_I(t)$, um die Umschaltverluste auszugleichen. Die Umschaltverluste $\Delta N_I(t_0)$ müssen daher überkompensiert werden, und die Signalgruppe muss überdies die meisten Fahrzeuge bis zum Zeitpunkt t abfertigen können.

Zur Koordination mit benachbarten Kreuzungen ist es unter Umständen sinnvoll, auch zweit- und drittbeste Lösungen mit zu berücksichtigen. Dies begründet sich auch dadurch, dass derzeit noch die Wahl des Zeithorizonts $\Delta t = t - t_0$ offen ist, von dem die beste Wahl der Signalgruppe abhängen kann.

Es werden daher die Abfertigungsraten von Fahrzeugen pro Zeiteinheit bestimmt, d. h. die Durchsätze

$$Q_J(t) = \frac{N_J(t)}{t - t_0} . \qquad (6)$$

Demgegenüber steht der Wert

$$Q_I'(t) = \frac{N_I'(t)}{t - t_0} = Q_I(t) + \frac{\Delta N_I(t_0)}{t - t_0} \qquad (7)$$

für eine Fortsetzung der laufenden Grünphasen. Durch den Zusatzterm $\Delta N_I(t_0)/(t - t_0)$ gibt es immer eine gewisse Tendenz zur Fortsetzung laufender Grünphasen, die aber nicht bedingungslos ist, sondern Umschaltverluste genau abwägt.

Die für verschiedene Signalgruppen $J$ und Zeitpunkte $t$ resultierenden Werte $Q_J(t)$ und $Q_I'(t)$ können in eine Rangfolge gebracht werden. Sie bestimmt die Präferenz für die Wahl verschiedener Signalgruppen, d. h. ihre Priorität aus Sicht eines einzelnen Knotens. Berücksichtigt werden beispielsweise alle Signalgruppen, deren

Wert $Q_I'(t)$ bzw. $Q_J(t)$ zu einem der Zeitpunkte $t$ um nicht mehr als einen bestimmten Prozentsatz s unter der besten Lösung liegt. Es kann nämlich vernünftig sein, eine Signalgruppe mit hoher, aber nicht höchster Priorität zu wählen, wenn dadurch eine Koordination mit Ampelschaltungen an benachbarten Knoten erreicht werden kann. Dadurch wird die Synchronisation zwischen benachbarten Knoten erleichtert. Daher werden für eine Grünschaltung alle Signalgruppen hoher Priorität in Betracht gezogen. Sehr niedrige Werte von

$Q_I'(t) = N_I'(t)/(t - t_0)$ geben dagegen Anlass, die Bedienung des Straßenabschnitts $i$ abzubrechen, d. h. die entsprechende Ampel rot zu schalten.

Die Erfindung ist nicht beschränkt auf das hier ausgeführte Ausführungsbeispiel zur Identifikation besonders aussichtreicher Steuerungen von Einzelknoten.

c) Nur dann, wenn eine *kleine* Verzögerung eines Umschaltzeitpunkts zu einer Verbesserung geführt hat, wird eine weitere Verzögerung getestet. Eine Variation des Endes der Grünzeitdauer beginnt sinnvollerweise mit der mittleren, verkehrszustandabhängigen Grünzeitdauer in der Vergangenheit.

9) Zu gegebenen Randbedingungen und angenommenen Steuerungen wird die Verkehrsdynamik im Subsystem anhand eines geeigneten Verkehrsmodells unter Berücksichtigung der Abzweigewahrscheinlichkeiten der Fahrzeuge ermittelt, für deren Bestimmung Sensormessungen oder gängige Schätzmodelle herangezogen werden können. Wenn das Verkehrsaufkommen in den Randbereichen und Beziehungen für die Abzweigewahrscheinlichkeiten $\alpha_{ij}(t)$ bekannt sind bzw. geeignet vorausgesetzt werden, lassen sich die Verkehrsströme im Netz über kurze Zeiträume für jede beliebige Kombination und Schaltfolge von Lichtsignalen prognostizieren. Hierzu wurden in der Vergangenheit verschiedene Modelle entwickelt wie Fahrzeugfolgemodelle, zelluläre Automaten, fluiddynamische Verkehrsmodelle usw. Beispielsweise kann man den zeitabhängigen Verkehrsfluss in Netzwerken mit folgenden Formeln (oder mit Formeln ähnlichen Inhalts oder ähnlicher Wirkung) näherungsweise beschreiben: Zunächst unterteilt man das Netzwerk in homogene Straßenabschnitte (Richtungsfahrbahnen) $i$ mit einer konstanten Spurzahl $l_i$. Der Verkehrsfluss zum Zeitpunkt $t$ einfahrender Fahrzeuge sei durch $Q_i^{arr}(t)$ bezeichnet und der Verkehrsfluss der den Streckenabschnitt verlassenden Fahrzeuge durch $Q_i^{dep}(t)$. Die Abzweigewahrscheinlichkeit (relative Abzweigehäufigkeit) zum Zeitpunkt $t$ von Straßenabschnitt $i$ in einen benachbarten Abschnitt $j$ sei $\alpha_{ij}(t) \geq 0$. Dann gilt wegen der Erhaltung der Fahrzeugzahl:

$$I_j Q_j^{arr}(t) = \sum_i I_i Q_i^{dep}(t)\alpha_{ij}(t) \text{ mit } \sum_j \alpha_{ij}(t) = 1. \qquad (8)$$

Durch eine einfache Verallgemeinerung ist auch die Unterscheidung von Fahrzeugen mit verschiedenen Zielen d möglich.

Der tatsächliche Zufluss $Q_i^{arr}(t)$ ist durch die maximal verfügbare bzw. angebotene Kapazität $Q_i^{arr,pot}(t)$ begrenzt (das "Angebot"), der tatsächliche Abfluss $Q_i^{dep}(t)$ durch die maximal nachgefragte Kapazität $Q_i^{dep,pot}(t)$ (die "Nachfrage"). Realisiert wird an einem Knoten bestenfalls das Minimum von "Angebot" und "Nachfrage", d. h.

$$I_j Q_j^{arr}(t) \leq \min\left[ I_j Q_j^{arr,pot}(t), \sum_i I_i Q_i^{dep,pot}(t)\alpha_{ij}(t) \right] \qquad (9)$$

für alle $j$. Daraus kann man zusammen mit

$$0 \leq Q_j^{arr}(t) \leq Q_j^{arr,pot}(t), \, 0 \leq Q_i^{dep}(t) \leq Q_i^{dep,pot}(t)$$

und Gleichung (8) geeignete Werte $Q_i^{dep}(t)$ bestimmen, z. B. durch Lösung eines Gleichungssystems. Dabei ermittelt man die angebotene Kapazität pro Spur nach der Formel:

$$Q_i^{dep,pot}(t) = \begin{cases} Q_i^{arr}(t - L_i/V_i^0) & \text{falls } l_i(t) = 0, \\ Q_i^{max} & \text{falls } l_i(t) > 0, \end{cases} \qquad (10)$$

wobei sich die am weitesten vom stromabwärtigen Ende des Straßenabschnitts $i$ entfernt stehenden Fahrzeuge am Ort $l_i(t)$ befinden. Wenn auf dem Abschnitt $i$ keine Fahrzeuge stehen, also freier Verkehr herrscht ($l_i(t)=0$), dann ist der Ausfluss aus dem Streckenabschnitt $i$ pro Spur durch den Zufluss $Q_i^{arr}$ von Fahrzeugen zum Zeitpunkt $t - L_i/V_i^0$ gegeben. Hierbei bezeichnet $L_i$ die Länge und $V_i^0$ die zulässige Höchstgeschwindigkeit sowie $L_i/V_i^0$ die freie (unbehinderte) Fahrtzeit auf Streckenabschnitt $i$. Falls es eine Warteschlange im Streckenabschnitt $i$ gibt ($l_i(t)>0$), bestimmt der maximale Ausfluss $Q_i^{max}$ aus dem Stau pro Spur den Verkehrsfluss von Fahrzeugen, die den Straßenabschnitt $i$ verlassen. Für die angebotene Kapazität pro Spur gilt:

$$Q_j^{arr,pot}(t) = \gamma_{ij}(t) \times \begin{cases} Q_j^{max} & \text{falls } l_j(t) < L_j, \\ Q_j^{dep}(t - L_j/|c|) & \text{falls } l_j(t) = L_j. \end{cases} \qquad (11)$$

Demzufolge ist der potenzielle Zufluss gleich null, wenn die Ampel von Streckenabschnitt $i$ zum Streckenabschnitt $j$ nicht freigeschaltet ist ($\gamma_{ij}(t)$=0). Bei Freischaltung/grüner Ampel ($\gamma_{ij}(t)$=1) kann ein maximaler Verkehrsfluss $Q_i^{max}$ vom Streckenabschnitt $j$ aufgenommen werden, wenn sich der Stau nicht bis zum Ende der Strecke ausdehnt ($l_j(t)$ <$L_j$). Wenn jedoch $l_j(t) = L_j$ ist, wird der maximale Zufluss durch den Abfluss $Q_j^{dep}$ aus dem Streckenstück $j$ zur Zeit $t-L_j/|c|$ bestimmt, wobei $c \approx$ -15 km/h die Ausbreitungsgeschwindigkeit von Störungen im behinderten Verkehr ist. Die zeitliche Entwicklung der Lage des Stauendes kann mit folgender Formel berechnet werden:

$$\frac{dl_i}{dt} = -\frac{Q_i^{arr}\left(t-[L_i-l_i(t)]/V_i^0\right)-Q_i^{dep}\left(t-l_i(t)/|c|\right)}{Q_i^{arr}\left(t-[L_i-l_i(t)]/V_i^0\right)/V_i^0-\left[1-\tau'Q_i^{dep}\left(t-l_i(t)\right)/|c|\right]\rho^{jam}} \quad . \quad (12)$$

Dabei ist $l_j(t) \leq L_i$ die Entfernung zum stromabwärten Ende des Straßenabschnitts $i$, $V_i^0$ die zulässige Höchstgeschwindigkeit, $\tau'$= 1.8 s die sichere Folgezeit und $\rho^{jam}$ die Fahrzeugdichte pro Spur im gestauten Verkehr (z. B. vor einer roten Ampel).

Statt der oben genannten (Nährungs-)Formeln können auch Formeln ähnlichen Inhalts oder ähnlicher Wirkung verwendet werden. Schließlich ist die maximale Aufnahmekapazität des Streckenstücks $i$ für Fahrzeuge bestimmt durch die Spurzahl $I_i$ und die Länge $L_i$ eines Straßenabschnitts $i$. Sie wird berechnet durch die Formel

$$I_i L_i \rho^{jam} \quad . \qquad (13)$$

10) Soweit zur Berechnung der zeitabhängigen Verkehrsströme in Abhängigkeit von den Ampelschaltungen, die durch die zeitabhängigen Werte von $\gamma_{ij}(t)$ gegeben sind. Wir kommen nun zur Spezifikation des Bewertungs- und Auswahlverfahrens leistungsfähiger Lichtsignalsteuerungen im Rahmen des vorgeschlagenen lokalen Optimierungsansatzes, d. h. im Rahmen des dezentralen Steuerungsverfahrens.

Ist das Steuerungsziel die Optimierung des Durchsatzes der Fahrzeuge, die zwischen dem Zeitpunkt $t_0$ und $t_0 + T'$ von Lichtsignalanlagen abgefertigt werden, dann maximiert man beispielsweise den Ausdruck:

$$\sum_{i,j} \int_{t_0}^{t_0+T'} dt' \, I_i Q_i^{dep}(t')\alpha_{ij}(t') = \sum_{i} \int_{t_0}^{t_0+T'} dt' \, I_i Q_i^{dep}(t') , \qquad (14)$$

wobei sich die Summe über alle durch Lichtsignalanlagen abgefertigten Wechsel von einem Streckenabschnitt $i$ in einen Streckenabschnitt $j$ erstreckt. Wenn der Streckenabschnitt i nicht in den Streckenabschnitt $j$ führt, gilt $\alpha_{ij} = 0$. Statt einer globalen, d. h. systemweiten Optimierung, die rechentechnisch nicht zu bewältigen ist, wird erfindungsgemäß mit dem dezentralen Steuerungsverfahren die Maximierung des Performancemaßes

$$\sum_{i,j} \int_{t_0}^{t_0+T'} dt' \, w_{ij}^n \, I_i Q_i^{dep}(t')\alpha_{ij}(t') \qquad (15)$$

im Subnetzwerk $n$ verfolgt. Dabei bezeichnet $w_{ij}^n \geq 0$ das Gewicht, wie stark die Ampelsteuerung für den Wechsel von Streckenabschnitt $i$ in den Streckenabschnitt $j$ bewertet wird (s. Punkt 6). Wählt man $w_{ij}^n$ abfallend, wie dies unter Punkt 6c) ausgeführt und in Fig. 2 symbolisch dargestellt ist, so wird Rücksicht auf den Durchsatz an benachbarten Knoten genommen, und es kann in der Nachbarschaft eine Durchsatz-steigernde Kooperation entstehen. Das Performancemaß (15) lässt sich auf beliebige Optimierungskriterien verallgemeinern:

$$\sum_{i,j} \int_0^{t_0+T'} dt' \, w_{ij}^n \, f_{ij}^n(t') \qquad (16)$$

Hierbei bezeichnet $f_{ij}^n(t)$ eine beliebige Bewertungs- bzw. Zielfunktion von Simulations- oder Messgrößen der Kanten $i$ und $j$ oder des sie verbindenden Knotens zum Zeitpunkt $t$. Berücksichtigt werden können beispielsweise

  a) die Anzahl der wartenden Einheiten (Warteschlangenlänge),
  b) die Bedien- und/oder Wartezeiten,
  c) die Anzahl der eintreffenden Einheiten,
  d) die Anzahl der abgefertigten Einheiten,
  e) die potenzielle Abfertigungskapazität,
  f) die Pufferkapazität,
  g) die Priorität der Einheiten (z. B. Rettungsfahrzeuge, ÖPNV),
  h) eine bevorzugte Abfertigungsmenge,
  i) der Energieverbrauch oder die Kosten der Abfertigung,
  k) die Nähe zum Ziel.

Zur priorisierten Entfernung zielnaher Fahrzeuge aus dem System (siehe Punkt k) können beispielsweise zielnahe Fahrzeuge stärker gewichtet werden (sofern der Lichtsignalsteuerung entsprechende Informationen zur Verfügung gestellt werden, z. B. durch Informationsaustausch mit Zielführungssystemen von Fahrzeugen). Zu diesem Zweck könnte Formel (2) ersetzt werden durch:

$$N_i(t) = \sum_d \int_{t_0+\tau} dt' \frac{\overline{D}}{D_d} I_i Q_{id}^{dep}(t'), \qquad (17)$$

Dabei meint $\overline{D}$ die mittlere Fahrtstrecke der Fahrzeuge im Streckenabschnitt $i$ zu ihrem Ziel und $D_d$ die Fahrtstrecke der Fahrzeuge in Streckenabschnitt $i$ mit dem Ziel $d$. $Q_{id}^{dep}(t)$ ist der Fahrzeugfluss von Fahrzeugen mit Ziel $d$, die den Streckenabschnitt $i$ zum Zeitpunkt $t$ verlassen. Alternativ zur mittleren Fahrtstrecke kann auch die erwartete Fahrtzeit gewählt werden. Es kommen aber auch andere Formeln mit vergleichbarer Wirkung in Frage.

11) Das vorgeschlagene Steuerungsverfahren sieht vor, viele Größen auf mehrere Weisen zu berechnen, um eine zuverlässigere Gesamtschätzung $\overline{x}$ zu erreichen. Beispielsweise können die Abzweigewahrscheinlichkeiten aus benachbarten Sensordaten (den relativen Abzweigehäufigkeiten), aus Verkehrssimulationen und aus Routenwahlmodellen auf der Basis von Daten über die Ziele der Fahrer ermittelt werden. Weiterhin wird vorgeschlagen, bei der Schätzung der Abfertigungszeiten einer Einheit an nahe gelegenen Kanten Messwerte und/oder Kurzzeitprognosen, an entfernten Kanten dagegen historische Messwerte für vergleichbare Situationen stärker zu gewichten.
Zur redundanten Gesamtschätzung $\overline{x}$ einer Größe $x$ werden die einzelnen Simulations- oder Messwerte $x_k$ verschie-dener Verfahren $k$ mit ihrer Zuverlässigkeit $z_k$ (z.B. dem Inversen der Standardabweichung) gewichtet:

$$\overline{x} = \sum_{k=1}^n z_k x_k \bigg/ \sum_{k=1}^n z_k \,. \qquad (18)$$

Die Nichtverfügbarkeit einer dieser Datenquellen gefährdet die Funktionsfähigkeit der Steuerung nicht, was sie robust gegenüber Störungen macht. Fällt beispielsweise die $n$-te Messung oder Datenquelle aus, erfolgt die Bestimmung über:

$$\widetilde{x} = \sum_{k=1}^{n-1} z_k x_k \bigg/ \sum_{k=1}^{n-1} z_k \ , \qquad\qquad (19)$$

entsprechend der Zuverlässigkeit $z_n = 0$ des n-ten Werts.

12) Die Beschränkung der maximalen Grün- und Zykluszeit bei extrem hohem Verkehrsaufkommen erfolgt erforderlichenfalls durch Kontingentierung. Im Prinzip wird hierzu die Grünzeit künstlich beendet, wenn sie einen bestimmten Bruchteil $u_i^0$ einer maximalen Zykluszeit $T$ innerhalb eines Zeitintervalls $T$ überschreitet. Der Bruchteil $u_i^0$ kann beispielsweise proportional zum relativen Verkehrsaufkommen oder entsprechend Nutzer- oder systemoptimale Gesichtspunkte spezifiziert gewählt werden.

13) Besonders vorteilhaft ist das Betreiben der Anlage zusammen mit einem grünen Pfeil für Rechtsabbieger, um eine parallele Einzelabfertigung von Fahrzeugen in geeigneten Zeitlücken auch während des Bündelbetriebs bei starkem Verkehrsaufkommen zuzulassen. Dies ist vor allem für Nebenstraßen mit einer kleinen Spurzahl von Bedeutung.

14) Eine stärke Berücksichtigung von Nebenstraßen i mit kleiner Spurzahl $l_i$ kann erreicht werden, indem der Parameter $l_i$ in den Optimierungsformeln künstlich erhöht wird. Insbesondere wird die Bedeutung der Spurzahl ignoriert, indem man in den Optimierungsformeln generell $l_i = 1$ setzt. Dies führt zu einer gleichrangigen Behandlung von Haupt- und Nebenstraßen, wobei sich jedoch die durchschnittlichen Fahrtzeiten erhöhen.

15) Nachdem die optimale Netzwerksteuerung bestimmt wurde, kann zusätzlich auch die Dynamik der einzelnen Einheiten entlang der Kanten optimiert werden, um beispielsweise einen vermeidbaren Kraftstoffverbrauch durch überflüssiges Abbremsen und Beschleunigen zu vermeiden. Dies setzt voraus, dass die Einheiten Informationen und/oder Anweisungen seitens der Signalsteuerung entgegennehmen, etwa mittels Fahrzeug-Infrastruktur-Kommunikation.

16) Das unter Punkt 1) bis 14) skizzierte Optimierungsverfahren kann so modifiziert werden, dass es sich zur Optimierung der Netzwerkstruktur eignet. Dazu ergänzt oder entfernt man Kanten oder Knoten im System und/oder ihre Spurzahl bzw. Kapazität, eventuell auch Abbiegeverbote. Eine derartige Optimierung hat vor allem verkehrsplanerische Anwendungen und kann auch offline durchgeführt werden.

Die Eigenschaften der erfindungsgemäß vorgeschlagenen Verkehrssteuerung lassen sich wie folgt beschreiben:

Das Schema und die Reihenfolge der Bedienung von mobilen Einheiten (Fahrzeugen oder Fußgängern) wird auf der Basis einer Kurzzeitverkehrsprognose unter angenommenen Schaltzuständen der benachbarten Ampeln in einem bestimmten "Einflussbereich" (Subnetzwerk = Kern- und Randbereich) ermittelt, d. h. das Optimierungsprinzip wird nur lokal angewandt und definiert damit ein dezentrales Steuerungsprinzip.
Dadurch erfordert nur dieser Schritt eine kombinatorische Optimierung; und zwar nur für kurze Zeiträume und für wenige benachbarte Lichtsignalanlagen: Die Entkopplung weit entfernter Steuerungsbereiche und die Koordination von Nachbarbereichen erfolgt durch geringere Gewichtung der weiter entfernten Knoten im Randbereich. Ansonsten könnte eine lokale Variation einer Ampelschaltung bei globaler Optimierung eine Lichtsignalanlage am anderen Ende der Stadt beeinflussen. Dies würde eine extreme Sensitivität der Lichtsignalsteuerung gegenüber kleinen Störungen mit sich bringen, welche zulasten der Vorhersagbarkeit des Systemverhaltens (z. B. der Abzweigewahrscheinlichkeiten) ginge und damit zu chaotischen Reaktionen von Fahrern auf die unvorhersagbar variierende Schaltungsdynamik führen könnte. Dies hätte wiederum eine schlechte Gesamtperformance des Systems zur Folge. Ein lokales Steuerungsprinzip erreicht also eine geringere Sensitivität (größere Robustheit) gegenüber weit entfernten Abläufen zugunsten einer größeren Flexibilität, auf die Situation und Abläufe vor Ort zu reagieren.

Die Vorgehensweise bei der dezentralen Steuerung ist so, dass in regelmäßigen Zeitschritten, zum Beispiel alle 2 Sekunden, parallele Schaltentscheidungen in allen Bereichen $n$ getroffen werden, in denen ein vorzugsweise drahtloser Informationsaustausch zwischen benachbarten Ampelsteuerungen erfolgt. Die Schaltentscheidungen basieren auf dem Vergleich alternativer Steuerungsszenarien während eines Zeithorizonts der maximalen Länge $t-t_0 = T'$, der situationsabhängig gewählt werden kann. Ein sinnvoller Zeithorizont entspricht etwa der mittleren Grünzeit plus dem 2- bis 3-fachen der Standardabweichung der Grünzeit. Dieser Wert kann als exponentieller oder gleitender Mittelwert über ein Zeitfenster, als Erfahrungswert oder als Funktion anderer Messgrößen, wie dem Verkehrsaufkommen oder mittleren Füllgrad der Streckenabschnitte i des Bereichs n, gewählt werden.

An den benachbarten Knotenpunkten eines Optimierungsbereichs werden nicht alle denkbaren Kombinationen von Grünschaltungen miteinander kombiniert, sondern nur Schaltungen hoher Priorität, da unwahrscheinlich ist, dass eine sehr ungünstige Schaltung an einem Knoten durch eine sehr viel günstigere Schaltung an einem Nachbarknoten kompensiert werden kann. Dies macht das Optimierungsverfahren effizient, zusammen mit der Beschränkung auf kleine Subsysteme (Bereiche) von benachbarten Lichtsignalanlagen. Die Überschneidung der Randbereiche mit benachbarten Kernbereichen und die abfallende Gewichtung zum Rand dieser Bereiche hin macht es wahrscheinlich, dass die für benachbarte Knoten ermittelten Schaltprogramme meistens gut miteinander kompatibel sind, die Ampeln sich also kooperativ verhalten. Beim Vergleich alternativer Steuerungsprogramme werden mögliche Umschaltverluste entsprechend Formel (3) berücksichtigt. Dadurch ist ein häufiges Schalten nur bei geringen Verkehrsflüssen wahrscheinlich, wo Umschaltverluste unbedeutend sind. Bei größeren Verkehrsaufkommen sorgen sie für eine Tendenz zur Fortsetzung einer bestehenden Grünzeit, solange Fahrzeuge effizient abgefertigt werden.

Wenn das Verkehrsaufkommen gering ist, entspricht ein Einzelfahrzeug bereits der längsten "Warteschlange" und kann daher allein die Grünfreigabe erwirken. Bei geringem Verkehrsaufkommen werden die Einheiten also direkt bei ihrer Ankunft einzeln abgefertigt. Zugunsten einer Verringerung der Reaktions- bzw. Umschaltzeiten ist es sinnvoll, den Grundzustand der Ampeln rot zu wählen, wenn für ein Zeitintervall, das größer als die Umschaltzeit $\tau$ ist, kein weiteres Fahrzeug folgt.

Das Zurückschalten auf eine rote Ampel nach dem Passieren eines Fahrzeugs erlaubt eine schnellere Bedienung eines Fahrzeugs aus einer anderen Richtung.

Damit ein Fahrzeug vor seiner Einzelabfertigung nicht genötigt ist, an der Ampel abzubremsen, muss das Fahrzeug so weit stromaufwärts der Ampel detektiert werden, dass genügend Zeit zum Umschalten bleibt. Beträgt die zulässige Höchstgeschwindigkeit des Fahrzeugs $V_0$ und die Umschaltzeit (Gelbphase) $\tau$, so muss der Sensor die passierenden Fahrzeuge in einem Abstand $l = V_0\tau$ von der Lichtsignalanlage detektieren. Beim Passieren des Querschnitts im Abstand $l$ müsste die Umschaltung sofort begonnen werden. Observiert der Sensor die Verkehrssituation sogar im Abstand $l' > l$, so muss spätestens nach einem Zeitintervall von $(l'-l)/V_0$ umgeschaltet werden. Der Umschaltzeitpunkt könnte von der tatsächlich gemessenen Fahrzeuggeschwindigkeit $v$ abhängig gemacht werden und wäre idealerweise $(l'-l)/v$, um ungenutzte Grünzeiten zu minimieren.

Bei größerem Verkehrsaufkommen, wenn eine Einzelabfertigung wegen nahezu gleichzeitiger bzw. zeitnaher Ankünfte von Fahrzeugen nicht mehr konfliktfrei möglich ist, bewirkt das vorgeschlagene Steuerungsverfahren eine Bündelung von Einheiten durch längere Grün- und Rotphasen nach dem Prinzip der Minimierung der Umschaltverluste. Das Bündelungsprinzip resultiert automatisch aus der größeren Abfertigungsrate, die sich bei größeren Verkehrsaufkommen durch ein Abfertigen gleichartiger Einheiten ergibt (im Vergleich zur Einzelabfertigung unterschiedlicher Einheiten, die mit Umschalt-und Verlustzeiten verbunden ist).

Bei Überlastung, d. h. wenn eine weitere Zunahme von Einheiten im System dessen Durchsatz reduziert, kann das Prinzip der Minimierung der Umschaltverluste mit der priorisierten Behandlung zielnaher Fahrzeuge kombiniert werden, um diese so schnell wie möglich aus dem System zu entfernen und somit Platz für andere Fahrzeuge zu schaffen, d. h. Staus und Warteschlangen zu reduzieren.

Die oben beispielhaft ausgeführte Lichtsignalsteuerung verfolgt primär das Ziel der Durchsatzmaximierung, um damit die Gesamtwartezeiten zu minimieren und die Gesamtfahrzeiten zu minimieren. Als Ziel wurde also angenommen, dass möglichst viele Fahrzeuge möglichst schnell voran kommen. Das vorgeschlagene Verfahren zur Schaltung und Koordination der Lichtsignalanlagen löst durch Performancevergleich von Kurzzeit-Verkehrsprognosen für alternative Steuerungsszenarien unter anderem folgende Zielkonflikte:

- Einerseits möchte man längstmögliche Grünphasen zur Reduktion von Schaltzeitverlusten, andererseits eine "sofortige" Reaktion auf Vorgänge an benachbarten Ampeln, wie sie zur Etablierung einer grünen Welle erforderlich ist.

- Trotz eines Mangels an Pufferkapazität in folgenden StreckenAbschnitten müssen wichtige Ströme priorisiert abgefertigt werden, deren Nichtabfertigung zur Blockade anderer Ströme führen würde. Dies kann gegebenenfalls die vorzeitige Beendigung der Grünzeit erforderlich machen, zumal die Systemperformance ab einem bestimmten Füllgrad abnehmen kann.

Die erfindungsgemäße Steuerung, welche die typischen Merkmale einer Regelung aufweist, löst diese Zielkonflikte dadurch, dass Schaltzeitverluste durch ein vorzeitiges Umschalten zugunsten einer Synchronisation von benachbarten Grünphasen (Grüne Welle) durch eine prognostizierte höhere Abfertigung an den betroffenen Nachbarknoten überkompensiert werden. Eine derartige Koordination benachbarter Kreuzungen ergibt sich automatisch durch die Berücksichtigung der Verkehrsströme an benachbarten Kreuzungen. In gewisser Weise werden die Koordinationsgewinne in Form von zusätzlich abgefertigten Fahrzeugen anteilig den benachbarten Knoten gutgeschrieben, die bei einer Synchronisation gegenüber ihrer optimalen Steuerung Verluste hinnehmen müssen. Wenn diese "Gutschrift" die Verluste übertrifft, beteiligt sich die betroffene Lichtsignalanlage an einer koordinierten Schaltung.

Ein weiterer Vorzug der erfindungsgemäßen Steuerung ist ihre Robustheit und Ausfallsicherheit durch Redundanz: Wenn beispielsweise der Sensorinput einer Lichtsignalsteuerung ausfällt, so würden die Steuereinheiten beispielsweise automatisch entsprechend einer Festzeitsteuerung gesteuert (Rückfallebene). Genauso können die Abzweigewahrscheinlichkeiten $\alpha_{ij}(t)$ und die prognostizierten Abfertigungszeiten auf redundante Weise bestimmt werden.

Redundanz wird weiterhin dadurch erreicht, dass bei lokalem Ausfall der Messungen der Verkehrssituation die Daten durch das der Verkehrsprognose zugrunde liegende Simulationsmodell automatisch geschätzt werden. (Nach dem Prinzip der Fahrzeugzahlerhaltung werden Fahrzeuge auf freier Strecke nicht produziert oder vernichtet, so dass Simulationsmodelle aus lokalen Messwerten das dazwischen liegende Verkehrsgeschehen rekonstruieren bzw. voraussagen können.)

Weitere erfindungsgemäße Vorteile bestehen in der selbstständigen Reaktion der Knoten auf unerwartete Vorkommnisse wie Unfälle, Baustellen oder andere nicht vorhersehbare Ereignisse, die den Transport der mobilen Einheiten behindern. Die höhere Flexibilität führt zu Kosteneinsparungen, zumal auf den Aufbau und die Erhaltung einer zentralen Infrastruktur und Datenleitungen im Vergleich mit Verkehrsleitsystemen mit zentralen Verkehrsrechnern verzichtet werden kann. Das dezentrale Steuerungsverfahren kann aber auch in einer eventuell vorhandenen zentralen Infrastruktur umgesetzt werden und bestehende Festzeitsteuerungen oder andere vorgegebene Steuerungsprogramme einzelner Knoten ohne Probleme integrieren. Es ist bei der Informationsgewinnung und dem Datenaustausch jedoch auf die vorteilhafte Nutzung moderner Sensortechnologien und drahtloser Kommunikationsmethoden zugeschnitten.

Schließlich ist hervorzuheben, dass das vorgeschlagene Verfahren besonders adaptiv, flexibel und robust gegenüber lokalen Variationen und Ausfällen im System ist. Außerdem erlaubt es eine einfache und harmonisch auf das Gesamtverkehrssystem abgestimmte, also rücksichtsvolle statt vorbehaltslose Priorisierung des öffentlichen Personennahverkehrs. Hierzu wird ein ÖPNV-Fahrzeug mit einem größeren Gewicht versehen wie ein PKW, z. B. entsprechend der durchschnittlichen Passagierzahl.

**Patentansprüche**

1. Verfahren zur Steuerung des Transports von mobilen Einheiten innerhalb eines Netzwerkes, welches Knoten und Kanten aufweist, wobei das Netzwerk in Kernbereiche *n* unterteilt wird, denen jeweils ein Randbereich zugeordnet wird, sodass der Kernbereich und der dazugehörige Randbereich jeweils ein zusammenhängendes Subnetzwerk von Knoten und Kanten definieren, wobei die Kanten eine begrenzte Pufferkapazität an aufnehmbaren mobilen Einheiten besitzen und die Knoten oder Kanten mit Datenerfassungselementen ausgestattet sind und die Knoten eine begrenzte Abfertigungskapazität an zu bedienenden mobilen Einheiten haben sowie mit Steuereinheiten ausgestattet sind, für die ein Schaltzustand der Abfertigung von mobilen Einheiten, ein Schaltzustand der Nichtabfertigung und zwischen diesen ein Umschaltzustand vorgesehen ist,
**dadurch gekennzeichnet, dass**

   a die echtzeitfähige Steuerung dezentral und selbstorganisierend in den Steuereinheiten der Knoten oder den Steuereinheiten lokal begrenzter Subnetzwerke erfolgt, wobei die Steuereinheiten benachbarter Subnetzwerke miteinander zum Datenaustausch in Verbindung stehen und einzelne Knoten die kleinstmögliche Variante von Subnetzwerken darstellen,
   b1 Daten aus Voraussagemodellen der lokalen Abfertigungsprozesse am jeweiligen Knoten und/oder Daten aus Voraussagemodellen der lokalen Abfertigungsprozesse an benachbarten Knoten und/oder
   b2 Daten von Datenerfassungselementen des jeweiligen Knotens und/oder der mit ihm verbundenen Kanten und/oder Daten von Datenerfassungselementen benachbarter Knoten und/oder der mit ihnen verbundenen Kanten
   c für die lokale Simulation und Optimierung von Schaltzuständen der Steuereinheit zur Ermittlung der Leistungsfähigkeit d.h. Performance, der Knoten oder Subnetzwerke unter Berücksichtigung der Pufferkapazität der Kanten auf der Basis von Modellen für Kurzzeitprognosen bei angenommenen Schaltzuständen benachbarter Knoten eingesetzt werden, wobei
   c1 aus mehreren alternativen Steuerungsstrategien hoher Performance für die einzelnen Knoten durch Kombination dieser Steuerungsstrategien eine Auswahl von Steuerungsstrategien für Subnetzwerke generiert werden, die unter dem Gesichtspunkt der Performance besonders vielversprechend sind, wobei
   c2 die Kombination der jeweils besten Steuerungsstrategie jedes Einzelknotens des Subnetzwerkes nicht notwendigerweise die beste Steuerungsstrategie für das Subnetzwerk selber darstellt und daher durch einen geeigneten Test aus der Menge der generierten alternativen Steuerungsstrategien für Subnetzwerke jene identifiziert wird, welche dort die beste Koordination im Sinne der besten Performance im Subnetzwerk zeigt und anschließend

c3 im jeweiligen Kernbereich des Subnetzwerks die Steuerungsstrategie mit der besten Koordination ausgewählt und in entsprechende Schaltzustände für die betroffenen Knoten umgesetzt wird.

2. Verfahren nach Anspruch 1, **dadurch gekennzeichnet, dass** die in die lokale Optimierung in Verfahrensschritt c einbezogenen Ziel- bzw. Optimierungskriterien benachbarter Knoten in Abhängigkeit von der Lage im jeweiligen lokalen Optimierungsgebiet d.h. Subnetzwerk, gewichtet werden.

3. Verfahren nach Anspruch 2, **dadurch gekennzeichnet, dass** die Wichtung bei dem dezentralen Steuerungsverfahren durch die Maximierung des Ausdrucks

$$\sum_{i,j} \int_0^{t_0+T'} dt' \, w_{ij}^n \, f_{ij}^n(t')$$

erfolgt, wobei $f_{ij}^n(t)$ eine beliebige Bewertungs- bzw. Zielfunktion von Simulations- oder Messgrößen der Kanten $i$ und $j$ oder des sie verbindenden Knotens zum Zeitpunkt t bezeichnet, $w_{ij}^n$ die Gewichtung, $t_0$ den Startzeitpunkt der Optimierung und T' den Planungs- bzw. Optimierungszeithorizont.

4. Verfahren nach einem der Ansprüche 1 bis 3, **dadurch gekennzeichnet, dass** für die Simulation in Verfahrensschritt c gilt, dass

d1 bei geringer Nachfrage von den zu bedienenden Einheiten an den Knoten ohne Wartezeiten eine einzelne, gleichberechtigte Abfertigung der Einheiten erfolgt, wobei die Anzahl der abgefertigten Einheiten proportional zu den durchschnittlich ankommenden Einheiten ist,

d2 bei hoher Nachfrage mit unvermeidbaren Wartezeiten eine gruppenweise Abfertigung der Einheiten durch längere Schaltphasen nach dem Prinzip der Minimierung der Umschaltverluste erfolgt, wobei

d3 die Minimierung der Umschaltverluste bei Bedarf mit der priorisierten Abfertigung von zielnahen Einheiten kombiniert wird, um diese schnell aus dem Netzwerk zu entfernen,

d4 Schaltzeitverluste durch vorzeitiges Umschalten zugunsten einer Synchronisation von benachbarten Abfertigungsschaltzuständen durch eine prognostizierte höhere Abfertigungskapazität an benachbarten Knoten überkompensiert werden,

d5 Pufferkapazität bei Bedarf in den dem Knoten nachfolgenden Kanten reserviert wird, wobei die pro Kante zugestandene Pufferkapazität adaptiv angepasst wird,

d6 eine Priorisierung, nach der die Einheiten an den Knoten abgefertigt werden, auf der Grundlage der Eigenschaften der Einheiten erfolgt und dass

d7 eine Beschränkung der maximalen Dauer der Nichtabfertigung durch Kontingentierung erfolgt.

5. Verfahren nach einem der Ansprüche 1 bis 4, **dadurch gekennzeichnet, dass** die lokale, d.h. dezentrale, Optimierung ein datenbankgestütztes Verfahren verwendet, in dem eine Anzahl von Steuerungsstrategien hoher Performance in Abhängigkeit von Parametern hinterlegt werden, welche die Situation im jeweiligen Subnetzwerk charakterisieren und verfahrensbegleitend erhoben werden.

6. Verfahren nach einem der Ansprüche 1 bis 5, **dadurch gekennzeichnet, dass** die Kontingentierung nach nutzer- oder systemoptimalen Gesichtspunkten vorgenommen wird.

7. Verfahren nach einem der Ansprüche 1 bis 6, **dadurch gekennzeichnet, dass** die erforderlichen Modellparameter durch eine Kombination mehrerer alternativer Simulations- und Messdaten ermittelt werden.

8. Verfahren nach einem der Ansprüche 1 bis 7, **dadurch gekennzeichnet, dass** bei der Schätzung der voraussichtlichen Abfertigungszeiten einer Einheit an nahe gelegenen Kanten Messwerte und/oder Kurzzeitprognosen, an entfernten Kanten dagegen historische Messwerte für vergleichbare Situationen stärker gewichtet werden.

9. Verfahren nach einem der Ansprüche 1 bis 8, **dadurch gekennzeichnet, dass** bei Fehlen oder Unplausibilität von Messdaten gemäß Verfahrensschritt b2 die fehlenden bzw. unbrauchbaren Daten durch ein Simulations- oder Schätzmodell ersetzt werden und/oder dass bei Fehlen oder Unplausibilität von Simulations-oder Messdaten gemäß Verfahrensschritt b1 nach einer fest vorgegebenen Steuerungsstrategie gesteuert wird.

**10.** Verfahren nach einem der Ansprüche 1 bis 9, **dadurch gekennzeichnet, dass** parallel zur gruppenweisen Abfertigung von Einheiten zu passenden Zeitpunkten eine Einzelabfertigung von Einheiten erfolgt, die zu inkompatiblen, d. h. konfliktbehafteten Abfertigungsprozessen gehören.

**11.** Verfahren nach einem der Ansprüche 1 bis 10, **dadurch gekennzeichnet, dass** zielnahe Abfertigungsprozesse priorisiert erfolgen und dafür erforderliche Daten zusätzlich mit den Steuereinheiten ausgetauscht werden.

**12.** Verfahren nach einem der Ansprüche 1 bis 11, **dadurch gekennzeichnet, dass** zur Koordination konkurrierender vernetzter Abfertigungsprozesse oder zur Steuerung des Transports mobiler Einheiten kontinuierliche Signale oder Steuereingriffe eingesetzt werden.

**13.** Verfahren nach einem der Ansprüche 1 bis 12, **dadurch gekennzeichnet, dass** es zur Optimierung einer Netzwerkstruktur durch Variation von Knoten und Kanten verwendet wird.

**14.** Verfahren nach einem der Ansprüche 1 bis 13, **dadurch gekennzeichnet, dass** es mit einem Verfahren zur Optimierung der Abzweigewahrscheinlichkeiten kombiniert wird.

**15.** Verfahren nach einem der Ansprüche 1 bis 14, **dadurch gekennzeichnet, dass** es mit einem Verfahren zur Optimierung der Dynamik der einzelnen Einheiten entlang der Kanten kombiniert wird, wobei die Einheiten Informationen und/oder Anweisungen seitens der Steuereinheiten entgegennehmen.

**16.** Verwendung eines Verfahrens nach einem der Ansprüche 1 bis 15 für die Steuerung eines Verkehrsnetzes, wobei die Knoten des Netzwerkes die Kreuzungen und die Steuereinheiten die Ampeln und die Kanten die Straßenabschnitte und die mobilen Einheiten Fahrzeuge und/oder andere Verkehrsteilnehmer des Verkehrsnetzes darstellen.

**17.** Verkehrssystem mit einer Vielzahl von Kreuzungen, Straßenabschnitten, Datenerfassungselementen und Ampelanlagen mit Steuereinheiten, die für die Durchführung eines Verfahrens nach einem der Ansprüche 1 bis 16 speziell angepasst sind, **dadurch gekennzeichnet, dass** den Kreuzungen Ampelanlagen und Sensoren zugeordnet sind, wobei die Steuereinheiten zum Empfang von Daten mit den Sensoren in Verbindung stehen und dass die Steuereinheiten benachbarter Ampelanlagen zum Austausch von Daten miteinander in Verbindung stehen.

**18.** Verkehrssystem nach Anspruch 17, **dadurch gekennzeichnet, dass** die Datenverbindung zwischen den Sensoren und den Steuereinheiten der Ampelanlagen sowie zwischen den Steuereinheiten benachbarter Ampelanlagen drahtlos ausgebildet ist.

**19.** Verkehrssystem nach Anspruch 18, **dadurch gekennzeichnet, dass** die Datenverbindung als Wireless LAN, d.h. WLAN, als Bluetooth, als Infrarotverbindung, als Radarsignal, als Laserlink oder Variante davon ausgebildet ist.

**20.** Verwendung eines Verfahrens nach einem der Ansprüche 1 bis 15 für die Steuerung eines Produktionsprozesses, wobei die Knoten die Produktionsmaschinen oder produktiven Einheiten, die Kanten die Transportwege oder Zwischenlager zwischen ihnen und die mobilen zu bedienenden Einheiten die Produkte darstellen.

**21.** Verwendung eines Verfahrens nach einem der Ansprüche 1 bis 15 für die Steuerung der Logistik eines Gütertransportes, wobei die Knoten die Umschlagplätze, die Kanten die Transportwege und die zu bedienenden Einheiten die Transportgüter darstellen.

**Claims**

**1.** Method for the control of the transport of mobile units within a network composed of nodes and edges, where the network is subdivided into core areas n, each of which has an associated border area so that the core area and the associated border area each define a cohesive subnetwork of nodes and edges, with the edges having a limited buffer capacity for mobile units which can be received and with the nodes or edges being equipped with data acquisition elements, and with the nodes having a limited processing capacity for the mobile units to be processed and being equipped with control units for which a switching state with a processing of the units, a switching state without processing and, between them, a changeover switching state are defined,
**characterised in that**

a the control takes place in the control units of the nodes or in control units of locally limited subnetworks in a decentralized and self-organized way and potentially in real-time, where the control units of adjacent subnetworks are connected to one another for the purpose of data exchange and where individual nodes represent the smallest variant of subnetworks,

b1 data from prediction models of the local processing processes at the respective node and/or data from prediction models of the local processing processes at adjacent nodes, and/or

b2 data from data acquisition elements of the respective node or the edges connected to it, and/or data from data acquisition elements of adjacent nodes or the edges connected to them

c are used for the local simulation and optimization of the switching states of the control unit in order to determine the performance of the nodes or subnetworks on the basis of models for short-term predictions with fixed assumed switching states of the adjacent nodes, taking into account the buffer capacity of the edges, where

c1 from several alternative, highly performing switching strategies for the single nodes, by a combination of these switching strategies, a selection of from the perspective of performance particularly promising switching strategies for subnetworks is generated, and

c2 the combination of the best switching strategies for the single nodes of a subnetwork does not necessarily represent the best switching strategy for the subnetwork itself, which is why an appropriate test is used to identify that switching strategy among the plurality of the generated alternative switching strategies, which reaches the best coordination in the sense of the best performance in the subnetwork, and, subsequently,

c3 in the respective core area of the subnetwork the switching strategy with the best coordination is selected and converted into corresponding switching states for the relevant nodes.

2. The method as claimed in claim 1, **characterised in that** the destination and optimization criteria for adjacent nodes included in the local optimization in method step c are weighted as a function of the position in the respective local optimization region, i.e. subnetwork.

3. The method as claimed in claim 2, **characterised in that** the weighting is carried out in the decentralized control method by maximizing the expression

$$\sum_{i,j} \int_{0}^{t_0+T'} dt' \, w_{ij}^{n} f_{ij}^{n}(t')$$

where $f_{ij}^{n}(t)$ denotes any desired weighting or goal function of simulation or measurement variables of the edges $i$ and $j$ or of the node linking them at the time $t$, $w_{ij}^{n}$ denotes the weighting, $t_0$ the start time of the optimization and $T$ the planning and optimization time horizon.

4. The method as claimed in any one of claims 1 to 3, **characterised in that** for the simulation process in method step c:

d1 when there is little demand for the mobile units at the nodes, a single dispatch, with equal priority, of the units is carried out without any waiting times, with the number of dispatched units being proportional to the average number of arriving units,

d2 when there is a high demand with unavoidable waiting times, the units are dispatched in groups by means of relatively long switching phases based on the principle of minimizing the switching losses, with

d3 the process of minimizing the switching losses being combined as required with the prioritized dispatch of units close to the destination in order to quickly remove them from the network,

d4 switching time losses being more than compensated for by premature switching in favor of synchronization of adjacent dispatch switching states by means of a predicted higher dispatch capability at adjacent nodes,

d5 buffer capacity being reserved as required in the edges following the node, with the buffer capacity provided per edge being adaptively matched,

d6 prioritization, on the basis of which the units are dispatched at the nodes, being carried out on the basis of the characteristics of the units, and **in that**

d7 the maximum duration without any dispatches being restricted by setting of quota.

5. The method as claimed in any one of claims 1 to 4, **characterised in that** the local, i.e. decentralized, optimization uses a database-assisted method in which a number of high-performance control strategies are stored as a function of parameters which characterize the situation in the respective subnetwork and are raised as part of the method.

6. The method as claimed in any one of claims 1 to 5, **characterised in that** the quota are set on the basis of criteria of user or system optimality.

7. The method as claimed in any one of claims 1 to 6, **characterised in that** the required model parameters are determined by a combination of a plurality of alternative simulation and measurement data items.

8. The method as claimed in any one of claims 1 to 7, **characterised in that** in the process of estimating the predicted dispatch times of a unit, measured values and/or short-term prediction are more strongly weighted on close-by edges, while in contrast historical measured values are more strongly weighted for comparable situations on remote edges.

9. The method as claimed in any one of claims 1 to 8, **characterised in that**, if the measurement data according to method step b2 is missing or implausible, the missing or implausible data is replaced by a simulation or estimation model, and/or that if the simulation or measurement data according to method step b1 is missing or implausible, the process is controlled on the basis of fixed predetermined control.

10. The method as claimed in any one of claims 1 to 9, **characterised in that** units which are associated with incompatible dispatch processes, that is to say dispatch processes that are subject to conflict, are dispatched individually at appropriate times in parallel with the dispatch of units in groups.

11. The method as claimed in any one of claims 1 to 10, **characterised in that** data relating to unit or process destinations are interchanged with the control units for the nodes for prioritized dispatch of units or processes that are close to the destination.

12. The method as claimed in any one of claims 1 to 11, **characterised in that** continuous signals or control actions are used to coordinate competing processes or to control the transport of mobile units.

13. The method as claimed in any one of claims 1 to 12, **characterised in that** the method is used to optimize a network structure by variations of nodes and edges.

14. The method as claimed in any one of claims 1 to 13, **characterised in that** this method is combined with a method for optimizing the turning probabilities.

15. The method as claimed in any one of claims 1 to 14, **characterised in that** the method is combined with a method for optimizing the dynamics of the individual units along the edges, with the units receiving information and/or instructions from the signal controller.

16. Use of a method as claimed in any one of claims 1 to 15 for control of a traffic network, with the nodes in the network representing the crossings and the control units representing the traffic lights, and with the edges representing the road sections and the mobile units representing vehicles and/or others involved in the traffic network.

17. A traffic system having a multiplicity of crossings, road sections, data acquisition elements and traffic light installations with control devices which are especially adapted for carrying out a method as claimed in any one of claims 1 to 16, **characterised in that** the crossings have associated traffic light installations and sensors, with the control devices being connected to the sensors in order to receive data, and **in that** the control devices for adjacent traffic light installations are connected to one another in order to interchange data.

18. The traffic system as claimed in claim 17, **characterised in that** the data link between the sensors and the control devices for the traffic light installations as well as between the control devices for adjacent traffic light installations is wire-free.

19. The traffic system as claimed in claim 18, **characterised in that** the data link is in the form of a wireless LAN, i.e. WLAN, as Bluetooth, as an infrared link, as a radar signal, as a laser link or as a variant thereof.

**20.** Use of a method as claimed in any one of claims 1 to 15 for controlling a production process, with the nodes representing the production machines or productive units, the edges representing the transport paths or intermediate stores between them, and the mobile units representing the products.

**21.** Use of a method as claimed in any one of claims 1 to 15 for controlling the logistics of goods transport, with the nodes representing the transfer points, the edges representing the transport paths, and the mobile units representing the transport goods.

**Revendications**

**1.** Procédé de commande du transport d'unités mobiles à l'intérieur d'un réseau, qui présente des noeuds et des arêtes, dans lequel le réseau est divisé en zones centrales n, auxquelles une zone périphérique est respectivement coordonnée, de sorte que la zone centrale et la zone périphérique afférente définissent respectivement un sous-réseau connexe de noeuds et d'arêtes, dans lequel les arêtes possèdent une capacité de mémoire tampon limitée aux unités mobiles pouvant être reçues et les noeuds ou arêtes sont équipés d'éléments de enregistrement de données et les noeuds ont une capacité de prise en charge limitée aux unités mobiles à desservir ainsi que sont équipés d'unités de commande, pour lesquelles un état de commutation de la prise en charge d'unités mobiles, un état de commutation de la non prise en charge et entre ceux-ci un état de permutation est prévu,
**caractérisé en ce que**
a la commande en temps réel s'effectue de manière décentralisée et auto-organisée dans une unité de commande des noeuds ou les unités de commande des sous-réseaux limités localement, dans lequel les unités de commande de sous-réseaux voisins sont en liaison les unes avec les autres à des fins d'échange de données et les noeuds individuels représentent la plus petite variante possible de sous-réseaux,
b1 des données de modèles de prédiction des processus de prise en charge locaux sur les noeuds respectifs et/ou des données de modèles de prédiction des processus de prise en charge locaux sur des noeuds voisins et/ou
b2 des données des éléments d'enregistrement de données du noeud respectif et/ou des arêtes qui lui sont reliées et/ou des données des éléments d'enregistrement de données des noeuds voisins et/ou des arêtes qui lui sont reliées
c sont employées pour la simulation et l'optimisation locale d'états de commutation de l'unité de commande pour déterminer la puissance, c'est-à-dire la performance, des noeuds ou sous-réseaux en prenant en compte la capacité de mémoire tampon des arêtes sur la base des modèles pour des pronostics à court terme quand les noeuds voisins adoptent des états de commutation, dans lequel
c1 d'après plusieurs stratégies de commande alternatives de haute performance pour les noeuds individuels par combinaison de ces stratégies de commande une sélection de stratégies de commande pour les sous-réseaux sont générées, lesquelles sont particulièrement prometteuses du point de vue de la performance, dans lequel
c2 la combinaison de la meilleure stratégie de commande respective de chaque noeud individuel du sous-réseau ne représente pas obligatoirement la meilleure stratégie de commande pour le sous-réseau même et donc au moyen d'un test approprié parmi la quantité de stratégies de commande alternatives générées pour les sous-réseaux, il est identifié celle qui montre la meilleure coordination dans le sens de la meilleure performance dans le sous-réseau et ensuite
c3 dans la zone centrale respective du sous-réseau, la stratégie de commande avec la meilleure coordination est sélectionnée et est convertie dans les états de commutation correspondants pour les noeuds concernés.

**2.** Procédé selon la revendication 1, **caractérisé en ce que** les critères de temps et d'optimisation de noeuds voisins prise en compte lors de l'optimisation locale à l'étape de procédé c sont pondérés en fonction de la situation dans la zone d'optimisation locale respective, c'est-à-dire le sous-réseau.

**3.** Procédé selon la revendication 2, **caractérisé en ce que** la pondération s'effectue dans le cadre du procédé de commande décentralisé par la maximisation de la formule

$$\sum_{i,j} \int_0^{t_0+T'} dt'\, w_{ij}^n\, f_{ij}^n(t')$$

dans lequel $f_{ij}^n(t)$ désigne une fonction objective ou d'évaluation au choix de grandeurs de mesure ou de simulation des arêtes $i$ et $j$ ou du noeud leur étant relié au moment $t$, $w_{ij}^{n}$ la pondération, $t_0$ le moment de démarrage de l'optimisation et $T$ l'horizon temporel d'optimisation ou de planification.

4. Procédé selon une des revendications 1 à 3, **caractérisé en ce que** pour la simulation à l'étape de procédé c il s'agit que

   d1 en cas de demande moindre par les unités à desservir sur les noeuds sous temps d'attente, une prise en charge individuelle, égalitaire des unités ait lieu, dans lequel le nombre des unités prises en charge est proportionnel aux unités entrantes,

   d2 en cas de demande plus élevée avec des temps d'attente inévitables, une prise en charge par groupes des unités a lieu par l'intermédiaire de phases de commutation plus longues selon le principe de la minimisation des pertes de commutation, dans lequel

   d3 la minimisation des pertes de commutation est combinée au besoin avec la prise en charge selon des priorités d'unités proches de la destination, afin d'éliminer rapidement celles-ci du réseau,

   d4 des pertes de temps de commutation sont surcompensées par une commutation précoce au profit d'une synchronisation des états de commutation de prise en charge voisins par une capacité de prise en charge plus élevée pronostiquée sur les noeuds voisins,

   d5 une capacité de mémoire tampon est réservée au besoin dans les arêtes subséquentes au noeud, dans lequel la capacité de mémoire tampon concédée par arête est adaptée de manière adaptative,

   d6 une hiérarchisation selon des priorités, d'après laquelle les unités sont prise en charge sur les noeuds, a lieu sur la base des propriétés des unités et **en ce que**

   d7 une limitation de la durée maximale de non prise en charge a lieu par contingentement.

5. Procédé selon une des revendications 1 à 4, **caractérisé en ce que** l'optimisation locale, c'est-à-dire décentralisée, emploie un procédé protégé par banque de données, dans lequel une pluralité de stratégies de commande de plus haute performance sont stockées en fonction de paramètres, qui caractérisent la situation dans le sous-réseau respectif et sont répertoriés pendant le déroulement du procédé.

6. Procédé selon une des revendications 1 à 5, **caractérisé en ce que** le contingentement est entrepris selon les caractéristiques optimales du système ou de l'utilisateur.

7. Procédé selon une des revendications 1 à 6, **caractérisé en ce que** les paramètres de modèle requis sont déterminés par une combinaison de plusieurs données de mesure et de simulation alternatives.

8. Procédé selon une des revendications 1 à 7, **caractérisé en ce que** lors de l'estimation des temps de prise en charge prévisionnels d'une unité sur des arêtes proches, des valeurs de mesure et/ou des pronostics à court terme, sur des arêtes distantes en revanche des valeurs de mesure d'historique pour des situations comparables sont pondérée plus fortement.

9. Procédé selon une des revendications 1 bis 8, **caractérisé en ce que** en cas d'erreurs ou de non plausibilité des données de mesure selon l'étape de procédé b2, les données manquantes ou inutilisables sont remplacées par un modèle d'estimation ou de simulation et/ou **en ce que** en cas d'erreurs ou de non plausibilité des données de mesure ou de simulation selon l'étape de procédé b1 sont commandées selon une stratégie de commande fixe prescrite.

10. Procédé selon une des revendications 1 à 9, **caractérisé en ce que** parallèlement à la prise en charge par groupes d'unités aux moments appropriés, une prise en charge individuelle des unités, qui appartiennent aux processus de prise en charge incompatibles, c'est-à-dire enclins aux conflits, a lieu.

11. Procédé selon une des revendications 1 à 10, **caractérisé en ce que** des processus de prise en charge proche de la destination sont effectués selon des priorités et les données requises à cette fin sont échangées en outre avec les unités de commande.

12. Procédé selon une des revendications 1 à 11, **caractérisé en ce qu'**à des fins de coordination de processus de prise en charge interconnectés concurrents ou à des fins de commande du transport d'unités mobiles, des signaux ou des interventions de commande continus sont employés.

**13.** Procédé selon une des revendications 1 à 12, **caractérisé en ce qu'**il est employé pour l'optimisation d'une structure de réseau par variation des noeuds et arêtes.

**14.** Procédé selon une des revendications 1 à 13, **caractérisé en ce qu'**il est combiné avec un procédé d'optimisation des probabilités de dérivation.

**15.** Procédé selon une des revendications 1 à 14, **caractérisé en ce que** il est combiné avec un procédé d'optimisation de la dynamique des unités individuelles le long des arêtes, dans lequel les unités recueillent des informations et/ou instructions du côté des unités de commande.

**16.** Utilisation d'un procédé selon une des revendications 1 à 15 pour la commande d'un réseau de circulation routière, dans lequel les noeuds du réseau représentent les carrefours et les unités de commande représentent les feux de circulation et les arêtes représentent les tronçons de voies et les unités mobiles représentent les véhicules et/ou d'autres participants à la circulation du réseau de circulation routière.

**17.** Système de circulation routière comportant une pluralité de carrefours, tronçons de voies, éléments d'enregistrement de données et installations de feux de circulation avec des unités de commande, qui sont spécialement adaptés pour la mise en oeuvre d'un procédé selon une des revendications 1 à 16, **caractérisé en ce que** des capteurs sont affectés aux carrefours et aux feux de circulation, dans lequel les unités de commande sont en liaison avec les capteurs à des fins de réception de données et les unités de commande d'installations de feux de circulation voisines sont en liaison les unes avec les autres à des fins d'échange de données.

**18.** Système de circulation routière selon la revendication 17, **caractérisé en ce que** la liaison de données entre les capteurs et les unités de commande des installations de feux de circulation ainsi que entre les unités de commande d'installations de feux de circulation voisines s'effectue sans fil.

**19.** Système de circulation routière selon la revendication 18, **caractérisé en ce que** la liaison de données est réalisée comme une liaison LAN sans fil, c'est-à-dire WLAN, une liaison Bluetooth, une liaison infrarouge, à signal radar, à liaison laser ou une variante de celles-ci.

**20.** Utilisation d'un procédé selon une des revendications 1 à 15 pour la commande d'un processus de production, dans laquelle les noeuds représentent les machines de production ou les unités productives, les arêtes représentent les voies de transport ou les centres de transfert entre celles-ci et les unités mobiles à desservir représentent les produits.

**21.** Utilisation d'un procédé selon une des revendications 1 à 15 pour la commande de la logistique d'un transport de biens, dans laquelle les noeuds représentent les centres de transbordement, les arêtes représentent les voies de transport et les unités à desservir représentent les biens transportés.

**Fig. 1**

Routenwahl-modell

Ermittlung von Abfertigungs- u. Wartezeiten

Ziele, falls bekannt

Abzweigewahr-scheinlich-keiten

Netzwerkstruktur (inklusive Kapazitäten etc.)

Unterteilung in Kernbereiche

Kommunikation mit betroffenen Nachbar-bereichen

Steuerung im Randbereich

Kommunikation mit betroffenen Nachbar-bereichen

Umsetzung der besten Steuerung

Gewichte

Rand-bedingungen

Simulationsmodell mit gegebener Steuerung und Randbedingungen

Prognose

Bewertung im Kern- und Randbereich mit Gewichtung

Bewertungs-funktion für Knoten

Datenerfassungs-elemente (z. B. Messwerte von Sensoren)

Angenommene Steuerung im Kernbereich

Erzeugung von alternativen Steuerungen

Datenbank guter Steuerungen in Abh. von Zust.-parametern

Historische Daten aus Datenbank

Parameter-anpassung, z.B. verfügbare Pufferkapazität

Maximale Zeit der Nicht-abfertigung

Default-steuerung (falls kein Dateninput)

EP 1 883 873 B1

Kernbereich

Randbereich

Knotengewichte

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4436339 A1
- DE 19841457 A1
- DE 19647127 A1
- EP 1057155 B1